# EUROPEAN PATENT APPLICATION

(11) **EP 4 513 334 A1**
(43) Date of publication of application: **26.02.2025**
(21) Application number: 23849252.4
(22) Date of filing: 26.07.2023
(51) Int. Cl.: G06F 9/50

(54) **MEMORY MANAGEMENT METHOD AND ELECTRONIC DEVICE**

(30) Priority: 30.07.2022 CN 202210912594
(71) Applicant: Huawei Technologies Co., Ltd., Shenzhen, Guangdong 518129 (CN)
(72) Inventor: JI, Kecheng, Shenzhen, Guangdong 518129 (CN); FANG, Jinxuan, Shenzhen, Guangdong 518129 (CN); WANG, Lin, Shenzhen, Guangdong 518129 (CN); LI, Ling, Shenzhen, Guangdong 518129 (CN)
(74) Representative: Pfenning, Meinig & Partner mbB
(86) International application number: PCT/CN2023/109436
(87) International publication number: WO 2024/027544

(57) **Abstract**

A memory management method and an electronic device are provided, and relate to the field of terminal technologies, so that memory management can be performed by using a service or a functional module of an application as a granularity. This improves memory management performance of the electronic device. The method is applied to the electronic device, and the method includes: detecting a running status of a first application; and processing, when detecting that the running status of the first application is switched from a first running status to a second running status, a partial memory referenced by the first application, where the partial memory is a memory associated with a target service of the first application, and the target service is a non-critical service of the first application in the second running status.

## Description

This application claims priority to Chinese Patent Application No. 202210912594.8, filed with the China National Intellectual Property Administration on July 30, 2022 and entitled "MEMORY MANAGEMENT METHOD AND ELECTRONIC DEVICE", which is incorporated herein by reference in its entirety.

### TECHNICAL FIELD

This application relates to the field of terminal technologies, and in particular, to a memory management method and an electronic device.

### BACKGROUND

Currently, with popularization of electronic devices such as mobile phones, users have increasingly high requirements for smoothness of applications. In an electronic device, a memory is one of the most important system resources. If a free memory of a system is insufficient, smoothness of an application is greatly reduced, resulting in application freezing and affecting user experience. Therefore, an effective memory management method needs to be urgently proposed to improve performance of the electronic device.

### SUMMARY

To resolve the foregoing technical problem, embodiments of this application provide a memory management method and an electronic device. According to the technical solutions provided in embodiments of this application, memory management can be performed by using a service or a functional module of an application as a granularity. This improves memory management performance of the electronic device.

To achieve the foregoing technical objective, embodiments of this application provide the following technical solutions.

According to a first aspect, a memory management method is provided, and is applied to an electronic device or a component (for example, a chip system) that can implement a function of an electronic device. The method includes:
detecting a running status of a first application; and processing, when detecting that the running status of the first application is switched from a first running status to a second running status, a partial memory referenced by the first application, where the partial memory is a memory associated with a target service of the first application, and the target service is a non-critical service of the first application in the second running status.

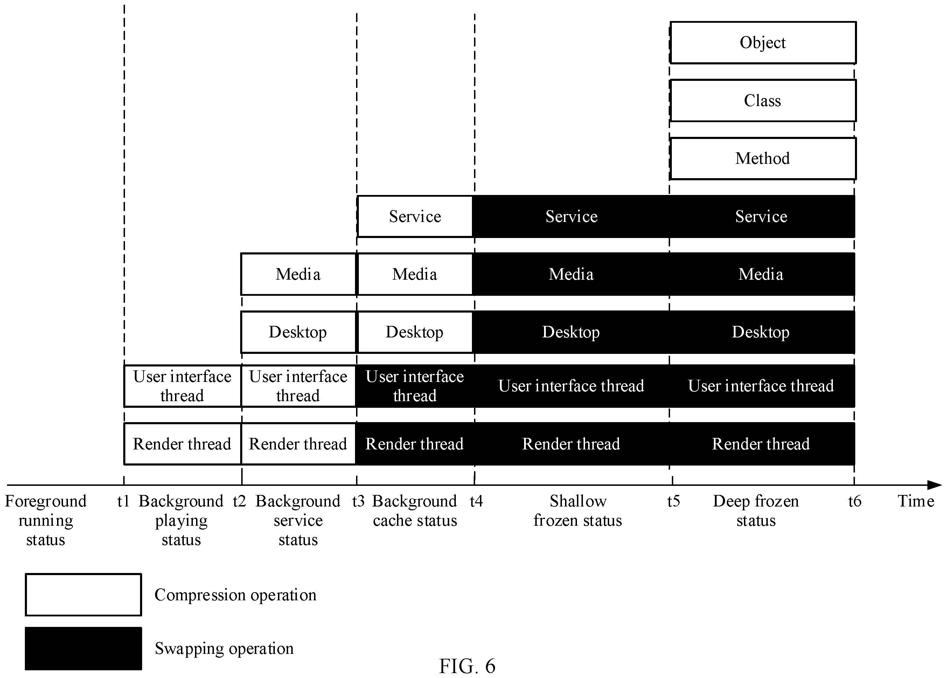

For example, the first application is a navigation application. As shown in FIG. 6, it is detected that a status of the navigation application is switched from a foreground running status (an example of the first running status) to a background playing status (an example of the second running status). A mobile phone may process a memory (for example, a memory referenced by a render thread and a memory referenced by a user interface thread) of a non-critical service used by the navigation application.

The processing the memory includes reclaiming the memory. First, because memory processing is performed based on a granularity of a functional module or a service of the application, precision of memory processing is higher. In some scenarios, memory data used by some functional modules (for example, a functional module that is not used temporarily) or a non-critical service of the application is processed, without affecting normal running of the entire application, so that a keepalive degree of the application can be improved, and a probability that the application is killed or abnormally exited can be reduced. For example, for some background applications, the electronic device may reclaim only a memory referenced by some functional modules or a non-critical service of the background applications. In this way, when survival of the background applications is ensured as much as possible, the memory of the applications is released to a large extent. This enhances smoothness and stability of the electronic device, and improves memory management efficiency of the electronic device.

Second, in the conventional technology in which an onTrimMemory mechanism is relied on and an application is expected to actively release memory data, the application actually does not release the memory data, and memory pressure of a system is still high. By comparison, in the technical solutions in this embodiment of this application, the application does not need to actively release the memory data. Specifically, in this embodiment of this application, when detecting that the application is in a corresponding running status of a life cycle, the electronic device may automatically process the memory data of the some functional modules or the non-critical service of the application. In this way, memory pressure of the system is relieved. In addition, the electronic device reclaims the corresponding memory data from the some functional modules or the non-critical service of the application, so that a total memory occupied by the application is reduced. Therefore, a probability that the application is killed or abnormally exited is greatly reduced.

In a possible design, the processing, when detecting that the running status of the first application is switched from a first running status to a second running status, a partial memory referenced by the first application includes: when detecting that the running status of the first application is switched from the first running status to the second running status, and duration in which the first application is in the second running status reaches a first threshold, processing the partial memory referenced by the first application.

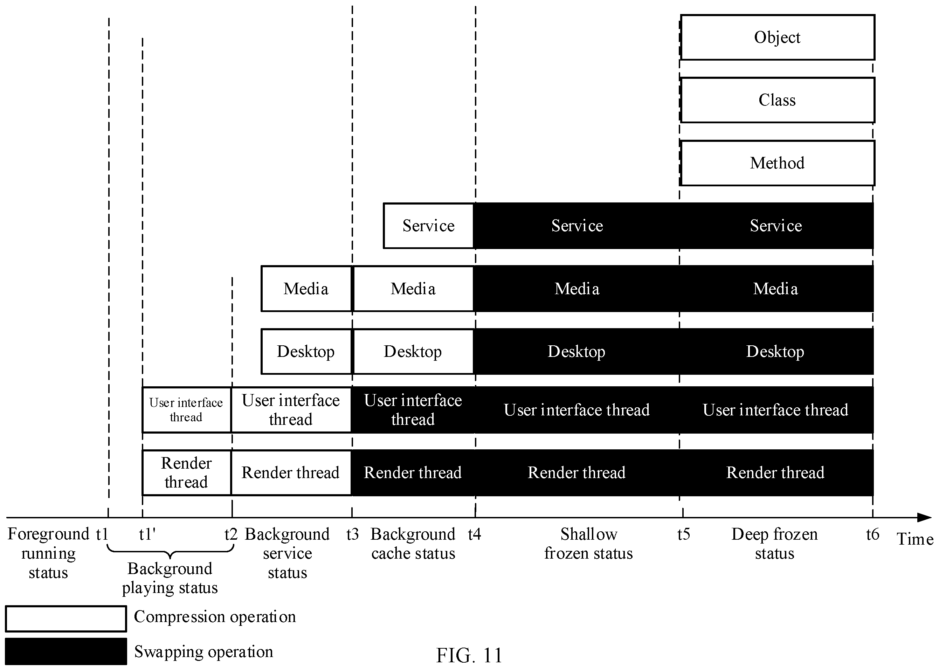

For example, as shown in FIG. 11, it is detected that at a moment t1, a running status of the navigation application (an example of the first application) is switched from the foreground running status (an example of the first running status) to the background playing status (an example of the second running status). When duration (duration t1-t1') in which the navigation application is in the background playing status reaches the first threshold, a partial memory (the memory referenced by the render thread and the memory referenced by the user interface thread) referenced by the navigation application is processed.

In this way, after the application switches the running status, the electronic device may delay processing. In other words, the electronic device may perform memory reclamation after a period of time since the application switches the running status, to ensure that the running status of the application is stable.

In a possible design, the target service includes a first service and/or a second service, a memory associated with the first service includes a first partial memory, and a memory associated with the second service includes a second partial memory.

The first partial memory is a page that is not referenced by the first application in a first time period.

The second partial memory is a compressed page that is not referenced by the first application in a second time period.

For example, as shown in FIG. 6, the application is switched from the foreground running status to the background playing status. In the background playing status, the first partial memory includes the memory referenced by the render thread and the memory referenced by the user interface thread. The first partial memory is not referenced by the first application in a time period from t1 to t2. When it is detected that the application is switched from the foreground running status to the background playing status, the mobile phone may reclaim the memories referenced by non-critical services such as the render thread and the user interface thread.

For example, the navigation application is switched from the background playing status to a background service status. In the background service status, the first partial memory includes a memory referenced by a surface (surface) and media (media). The first partial memory is not referenced by the navigation application in a time period from t2 to t3. When it is detected that the application is switched from the background playing status to the background service status, the mobile phone may reclaim the memory referenced by the non-critical services such as the surface and the media.

For example, the navigation application is switched from the background service status to a background cache status. In the background cache status, the first partial memory includes a memory referenced by a service (service), and the second partial memory includes the memory referenced by the render thread and the memory referenced by the user interface thread. The first partial memory is not referenced by the navigation application in a time period from t3 to t4, and the second partial memory is not referenced by the navigation application in a time period from t1 to t3 (the second time period). When it is detected that the application is switched from the background service running status to the background cache status, the mobile phone may reclaim the memories referenced by the non-critical services such as the service, the render thread, and the user interface thread.

For example, the navigation application is switched from the background cache status to a shallow frozen status. In the shallow frozen status, the second partial memory includes the memory referenced by the service, the media, and the surface. The memory of the service is not referenced by the navigation application in the time period from t3 to t4 (the second time period), and memories of the media and the surface are not referenced by the navigation application in a time period from t2 to t4 (the second time period). When it is detected that the navigation application is switched from the background cache running status to the shallow frozen status, the mobile phone may reclaim the memory referenced by the non-critical services such as the service, the media, and the surface.

For example, the navigation application is switched from the shallow frozen status to a deep frozen status. In the deep frozen status, the first partial memory includes a memory referenced by an object (object), a class (class), and a method (method). Memories of the object, class, and method are not referenced by the navigation application in a time period from t5 to t6 (the first time period). When it is detected that the navigation application is switched from the shallow frozen status to the deep frozen status, the mobile phone may reclaim the memory referenced by the non-critical services such as the object, the class, and the method.

In a possible design, duration of the second time period is greater than duration of the first time period.

In a possible design, the memory of the first service is processed in a first compression manner, and the memory of the second service is processed in a second compression manner.

In this way, for memory data that is not used by the application in a short period of time and memory data that is not used by the application in a long period of time, different compression manners may be used to perform memory processing, to improve memory processing performance.

In a possible design, the second running status includes a first background running status.

The processing, when detecting that the running status of the first application is switched from a first running status to a second running status, a partial memory referenced by the first application includes:
when detecting that the running status of the first application is switched from the first running status to the first background running status, compressing the first partial memory associated with the first service. The first partial memory may be the memory that is not referenced by the application in a short period of time (for example, the first time period).

In this way, for memory data that is not used in a short period of time, the memory data may be compressed, and stored in compressed space, to save partial memory space.

In a possible design, the second running status includes a first background running status.

The processing, when detecting that the running status of the first application is switched from a first running status to a second running status, a partial memory referenced by the first application includes:
when detecting that the running status of the first application is switched from the first running status to the first background running status, swapping the second partial memory associated with the second service to disk space. The second partial memory may be the memory that is not referenced by the application in a long period of time (for example, the second time period).

In this way, for compressed memory data (for example, a compressed memory page) that is not used for a long period of time, the compressed memory data may be swapped, for example, swapped to disk space (for example, a flash component) by using a flushing mechanism, to reduce memory usage.

In a possible design, the first running status is a foreground running status.

In a possible design, the first running status is a second background running status.

In a possible design, the method further includes:
detecting that the running status of the first application is switched from the first background running status to a third background running status; and
compressing a third partial memory of the first application, where the third partial memory is a memory that is not referenced by the first application in the first time period; and/or
swapping a fourth partial memory of the first application to disk space, where the fourth partial memory is a memory that is not referenced by the first application in the second time period, and duration of the fourth time period is greater than duration of the third time period.

In a possible design, the processing a partial memory referenced by the first application includes:
obtaining a virtual memory area VMA corresponding to the partial memory and a linked list corresponding to the VMA, where the linked list includes the partial memory; and
processing the partial memory in the linked list.

In a possible design, the method further includes:
displaying a first interface; and
receiving an operation input by a user on the first interface, where the operation is used to enable a memory management function.

In a possible design, the first background running status includes the following statuses: a background playing status, a background service status, a background cache status, a shallow frozen status, and a deep frozen status.

In the background playing status, the first application executes a first task in a background. For example, the background playing status means that the application is switched to the background for running and no graphical interface is presented, but a function or task of the application is still running. For example, a music application runs a music playing task (an example of the first task) in the background, and the navigation application runs a navigation task in the background.

In the background service status, the first application provides a background service in the background, and does not execute the first task in the background. For example, the first application is a background service application. The background service application mainly implements background data collection, message push, or a resident interruption waiting service, for example, a Bluetooth connection. For another example, the application may push a message in the background. For another example, the application may collect some data, to push some messages to the user.

In the background cache status, the first application does not execute the first task in the background and does not provide the background service, and duration in which the first application is in a background running status reaches first duration.

In the shallow frozen status, the first application does not execute the first task in the background and does not provide the background service, and the duration in which the first application is in the background running status reaches second duration, where the second duration is greater than the first duration.

In the deep frozen status, the first application does not execute the first task in the background and does not provide the background service, and the duration in which the first application is in the background running status reaches third duration, where the third duration is greater than the second duration.

In a possible design, in the background playing status, the first service includes a service related to interface display. For example, as shown in FIG. 6, the service related to interface display includes non-critical services executed by the render thread and the user interface thread. In the background playing status, the electronic device may reclaim the memory referenced by the render thread and the memory referenced by the user interface thread of the application, to reduce memory usage of the application.

In the background service status, the first service includes a service corresponding to the first task (a task that is not executed by the first application in the background). For example, as shown in FIG. 6, in the background service status, the first application usually does not execute services corresponding to the media and the surface in the background. When detecting that the application enters the background service status, the electronic device may compress the memory referenced by the media and the surface, to obtain compressed memory data.

In the background cache status, the first service includes the background service, and the second service includes the service related to interface display. For example, as shown in FIG. 6, in the background cache status, the application no longer executes the background service (for example, a service), and does not switch to the foreground display interface for a long period of time. The first service includes the background service, and the second service includes the services executed by the render thread and the user interface thread. When detecting that the application enters the background cache status, the electronic device may compress a related memory of a service that is not referenced by the application in a short period of time, to obtain compressed memory data. In addition, the electronic device may swap compressed memory related to the render thread and the user interface thread that are not referenced by the application for a long period of time.

In the shallow frozen status, the second service includes the service corresponding to the first task and the background service. For example, as shown in FIG. 6, in the shallow frozen status, the second service includes media, a surface (the service corresponding to the first task), and a service (the background service). When detecting that the application enters the shallow frozen status, the electronic device may swap compressed memory of the media, the surface, and the service that are not referenced by the application for a long period of time.

In the deep frozen status, the first service includes a service corresponding to an object, a class, or a method. For example, as shown in FIG. 6, when detecting that the application enters the deep frozen status, the electronic device may compress the memory referenced by the object, the class, and the method.

According to a second aspect, a memory management apparatus is provided. The apparatus is used in an electronic device or a component (for example, a chip system) supporting a function of an electronic device. The apparatus includes:
a processing unit, configured to: detect a running status of a first application; and process a partial memory referenced by the first application when detecting that the running status of the first application is switched from a first running status to a second running status, where the partial memory is a memory associated with a target service of the first application, and the target service is a non-critical service of the first application in the second running status.

In a possible design, the processing, when detecting that the running status of the first application is switched from a first running status to a second running status, a partial memory referenced by the first application includes: when detecting that the running status of the first application is switched from the first running status to the second running status, and duration in which the first application is in the second running status reaches a first threshold, processing the partial memory referenced by the first application.

In a possible design, the target service includes a first service and/or a second service, a memory associated with the first service includes a first partial memory, and a memory associated with the second service includes a second partial memory.

The first partial memory is a page that is not referenced by the first application in a first time period.

The second partial memory is a compressed page that is not referenced by the first application in a second time period.

In a possible design, duration of the second time period is greater than duration of the first time period.

In a possible design, the second running status includes a first background running status; and
the processing, when detecting that the running status of the first application is switched from a first running status to a second running status, a partial memory referenced by the first application includes:
when detecting that the running status of the first application is switched from the first running status to the first background running status, compressing the first partial memory associated with the first service.

In a possible design, the second running status includes a first background running status; and
the processing, when detecting that the running status of the first application is switched from a first running status to a second running status, a partial memory referenced by the first application includes:
when detecting that the running status of the first application is switched from the first running status to the first background running status, swapping the second partial memory associated with the second service to disk space.

In a possible design, the first running status is a foreground running status.

In a possible design, the first running status is a second background running status.

In a possible design, the processing unit is further configured to:
detect that the running status of the first application is switched from the first background running status to a third background running status; and
compress a third partial memory of the first application, where the third partial memory is a memory that is not referenced by the first application in the first time period; and/or
swap a fourth partial memory of the first application to disk space, where the fourth partial memory is a memory that is not referenced by the first application in the second time period, and duration of the fourth time period is greater than duration of the third time period.

In a possible design, the processing a partial memory referenced by the first application includes:
obtaining a virtual memory area VMA corresponding to the partial memory and a linked list corresponding to the VMA, where the linked list includes the partial memory; and
processing the partial memory in the linked list.

In a possible design, the apparatus further includes:
a display unit, configured to display a first interface; and
an input unit, configured to receive an operation input by a user on the first interface, where the operation is used to enable a memory management function.

In a possible design, the first background running status includes the following statuses: a background playing status, a background service status, a background cache status, a shallow frozen status, and a deep frozen status.

In the background playing status, the first application executes a first task in a background.

In the background service status, the first application provides a background service in the background, and does not execute the first task in the background.

In the background cache status, the first application does not execute the first task in the background and does not provide the background service, and duration in which the first application is in the background running status reaches first duration.

In the shallow frozen status, the first application does not execute the first task in the background and does not provide the background service, and the duration in which the first application is in the background running status reaches second duration, where the second duration is greater than the first duration.

In the deep frozen status, the first application does not execute the first task in the background and does not provide the background service, and the duration in which the first application is in the background running status reaches third duration, where the third duration is greater than the second duration.

In a possible design, in the background playing status, the first service includes a service related to interface display.

In the background service status, the first service includes a service corresponding to the first task.

In the background cache status, the first service includes the background service, and the second service includes the service related to interface display.

In the shallow frozen status, the second service includes the service corresponding to the first task and the background service.

In the deep frozen status, the first service includes a service corresponding to an object, a class, or a method.

According to a third aspect, an embodiment of this application provides an electronic device. The electronic device has a function of implementing the method in any one of the foregoing aspects and any possible implementation of the foregoing aspects. The function may be implemented by hardware, or may be implemented by hardware executing corresponding software. The hardware or the software includes one or more modules corresponding to the foregoing function.

According to a fourth aspect, an embodiment of this application provides a computer-readable storage medium. The computer-readable storage medium stores a computer program (which may also be referred to as instructions or code). When the computer program is executed by an electronic device, the electronic device is enabled to perform the method in any one of the first aspect or the implementations of the first aspect.

According to a fifth aspect, an embodiment of this application provides a computer program product. When the computer program product runs on an electronic device, the electronic device is enabled to perform the method in any one of the first aspect or the implementations of the first aspect.

According to a sixth aspect, an embodiment of this application provides a circuit system. The circuit system includes a processing circuit, and the processing circuit is configured to perform the method in any one of the first aspect or the implementations of the first aspect.

According to a seventh aspect, an embodiment of this application provides a chip system, including at least one processor and at least one interface circuit. The at least one interface circuit is configured to: perform a receiving and sending function, and send instructions to the at least one processor, and when the at least one processor executes the instructions, the at least one processor performs the method in any one of the first aspect or the implementations of the first aspect.

### BRIEF DESCRIPTION OF DRAWINGS

FIG. 1A is a diagram of memory division according to an embodiment of this application;
FIG. 1B is a diagram of managing a memory based on a linked list according to an embodiment of this application;
FIG. 1C is a diagram of a linked list management mechanism in a case in which a memory page is referenced according to an embodiment of this application;
FIG. 1D is a diagram of a reclamation process in an inactive linked list in a case in which a memory is insufficient according to an embodiment of this application;
FIG. 1E is a diagram of a memory compression and swap mechanism according to an embodiment of this application;
FIG. 1F is a diagram of a decline process in an active linked list in a case in which a memory is insufficient according to an embodiment of this application;
FIG. 1G is a diagram of a memory management mechanism in the conventional technology;
FIG. 2 is a diagram of managing a memory based on a framework according to an embodiment of this application;
FIG. 3 is a diagram of a structure of an electronic device according to an embodiment of this application;
FIG. 4 is a diagram of a software structure of an electronic device according to an embodiment of this application;
FIG. 5 is a diagram of another structure of an electronic device according to an embodiment of this application;
FIG. 6 is a diagram of a scenario of a memory management method according to an embodiment of this application;
FIG. 7 is a diagram of a virtual memory area and a linked list according to an embodiment of this application;
FIG. 8 is a diagram of a memory management method according to an embodiment of this application;
FIG. 9 is a diagram of a memory management operation in a background cache status according to an embodiment of this application;
FIG. 10 is a diagram of a memory management operation in a shallow frozen status according to an embodiment of this application;
FIG. 11 is a diagram of a scenario of a memory management method according to an embodiment of this application;
FIG. 12 is a diagram of an interface according to an embodiment of this application; and
FIG. 13 is a diagram of a structure of a memory management apparatus according to an embodiment of this application.

### DESCRIPTION OF EMBODIMENTS

In the descriptions of embodiments of this application, "/" represents "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

First, some terms used in embodiments of this application are described.

### 1. Memory paging mechanism

Currently, memory management may be implemented based on a memory unit. The memory unit includes but is not limited to a memory page (page). In some solutions, a memory may be divided into memory pages based on a specific size (for example, 4K). The memory paging mechanism can improve memory access efficiency.

It should be noted that, with evolution of technologies, the memory unit may alternatively be implemented in another manner, and is not limited to a manner of a memory page. It should be understood that, in embodiments of this application, the memory page is used as an example of the memory unit, but this does not constitute a limitation on the memory unit.

### 2. Anonymous page and file-backed page

A user-mode memory includes an anonymous page (anonymous page) and a file-backed page (file-backed page).

The file-backed page refers to a memory page (which may be referred to as a memory page or a page for short) that has a source backup page in external storage space (for example, a disk). There is a mapping relationship between a file-backed page and a source backup page in the external storage space. In some embodiments, the file-backed page may be used to cache file data. For example, the file-backed page includes core library code, application code, an icon resource, or the like.

In a possible implementation, a program may read a file from the disk through a basic operation, for example, through reading/mapping (read/mmap). A system may apply for a page to store content read from the disk. The page used to store content of a disk file may be considered as a file-backed page.

The anonymous page is a memory page that does not have a corresponding file in the external storage space. For example, a page referenced by a heap or stack of a process may be an anonymous page. The anonymous page can be used to store a temporary calculation result of the process during running.

The external storage space refers to storage space other than the memory.

In addition to the file-backed page and the anonymous page, the memory may further include a kernel or a memory autonomously managed by a module in the kernel. This memory may be used to store a basic data structure and driver data that maintain normal running of the system.

During memory reclamation, the operating system may reclaim different types of memory in different manners and proportions.

### 3. Three types of memory areas

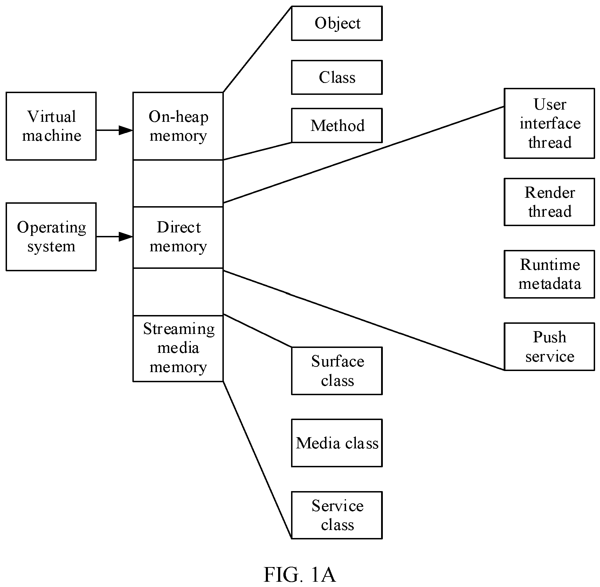

In some solutions, as shown in FIG. 1A, a memory of an electronic device may be divided into three parts.

A first partial memory is an on-heap memory (on-heap memory) of a Java virtual machine. Based on a memory management mechanism of the virtual machine, a garbage collector (garbage collector, GC) is used to manage the on-heap memory. In a possible implementation, the virtual machine invokes an mmap interface to allocate the on-heap memory. The operating system records the on-heap memory allocated by the virtual machine.

Optionally, as shown in FIG. 1A, the on-heap memory of the virtual machine may be used to store one or more of an object (object), a class (class), and a method (method).

A second partial memory is a direct (native) memory. For example, the direct memory may be an off-heap memory. Compared with the on-heap memory that is managed by the virtual machine, the direct memory is managed by the operating system. In this way, impact caused by garbage collection on an application can be reduced to an extent.

Optionally, data in the direct memory mainly includes: data associated with a display function, data associated with a rendering function, and data associated with a system service. For example, as shown in FIG. 1A, the direct memory stores data related to running of threads such as a user interface (user interface, UI) thread and a render (Render) thread. For another example, the direct memory stores runtime metadata of a thread. For another example, the direct memory stores data related to a push service.

In a possible implementation, the operating system allocates the direct memory through, for example, a C++ allocator. Optionally, the C++ allocator includes but is not limited to jemalloc, scudo, and the like. The C++ allocator is used as an example. The C++ allocator may identify an identifier (for example, a thread name) of a thread that currently applies for a memory, and determine a function of the thread based on the identifier of the thread. For example, if the C++ allocator identifies that the thread name of the thread that currently applies for the memory is RenderThread, it may be determined that the thread is a render thread, and a function corresponding to the thread name is rendering an interface of an application.

A third partial memory is a streaming media memory. Currently, hardware encoding and decoding are basically used in a chip architecture to accelerate video and audio rendering. To enable data streams to flow between a CPU and a hardware codec, an ION or dma_buf allocator is usually used in the industry to identify commonality of memory space. Through ION or dma_buf attribute identification, it may be determined that the memory is a memory used for playing.

Optionally, the streaming media memory may be configured to store data related to a surface (surface) class, a media (media) class, and a service (service) class.

### 4. Unified memory management performed by the operating system

Because memory resources are limited, when memory insufficiency occurs, the operating system may reclaim a memory that is not frequently used based on a memory use frequency. In some solutions, memory reclamation may be performed based on a memory watermark (watermark).

In a possible implementation, when receiving a memory allocation request, the system detects a quantity of remaining memories, and if the remaining memories are less than a specified low (low) watermark threshold, wakes up a reclamation thread (kswapd) to implement asynchronous memory reclamation, so as to maintain the quantity of remaining system memories, and meet a memory allocation requirement.

A Linux^{®} operating system (for example, Android^{®}) is used as an example. The reclamation thread may maintain free memories at 100 M to 200 M. When a quantity of the free memories is less than 100 (namely, the watermark), the reclamation thread may scan a used memory and reclaim a partial used memory. The reclamation thread may calculate a quantity of to-be-reclaimed memories based on a parameter Swappiness and a proportion of reclaimed memories, and reclaim the to-be-reclaimed memories based on the quantity of the to-be-reclaimed memories. In the memory reclamation mechanism, when calculating the quantity of the to-be-reclaimed memories, the reclamation thread does not consider an actual memory requirement of each application. Consequently, excessive memory reclamation or insufficient memory reclamation may be caused. For example, when free memories of the electronic device are few, the electronic device excessively reclaims a large quantity of memories. Consequently, a normally running application exits abnormally, and performance of the electronic device is affected.

### 5. Linked list and linked list-based memory management mechanism

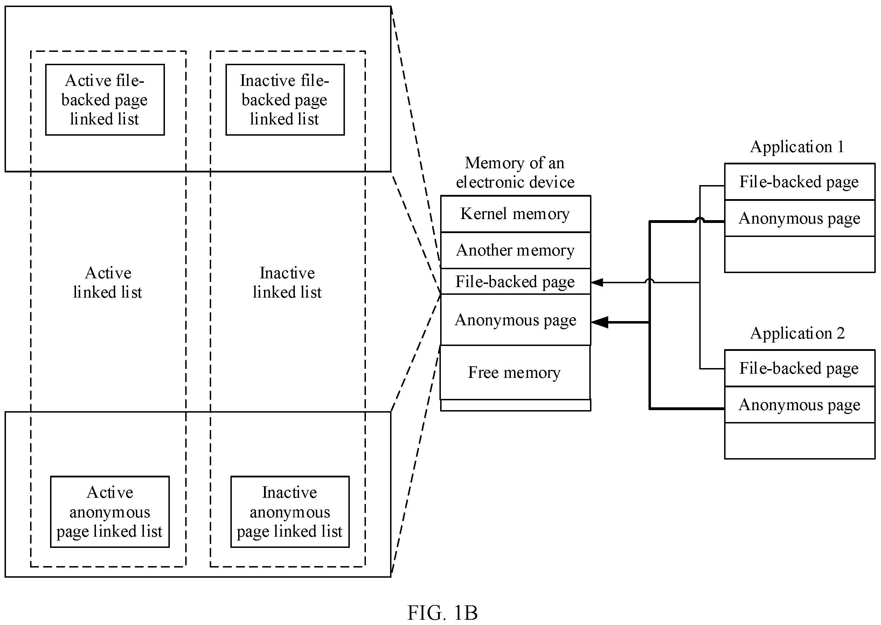

As shown in FIG. 1B, the entire memory of the electronic device may include a kernel memory, a file-backed page, an anonymous page, a free memory, and another memory. Different applications can use different memories to support running of the applications. For example, as shown in FIG. 1B, an application 1 uses a file-backed page and an anonymous page, and an application 2 uses a file-backed page and an anonymous page. It should be noted that the file-backed pages referenced by the application 1 and the application 2 may be a same file-backed page. In this case, the file-backed page may be referred to as a shared page. Alternatively, the file-backed pages referenced by the application 1 and the application 2 may be different file-backed pages. Similarly, the anonymous pages referenced by the application 1 and the application 2 may be a same anonymous page or different anonymous pages.

In some solutions, the kernel may manage the file-backed pages and the anonymous pages by using a least recently used (least recently used, LRU) linked list. Based on an active status of the linked list, the linked list may be classified into two levels: an active linked list and an inactive linked list. As shown in FIG. 1B, the active linked list includes an active anonymous page linked list used to manage the anonymous pages and an active file-backed page linked list used to manage the file-backed pages. The inactive linked list includes an inactive anonymous page linked list used to manage the anonymous pages and an inactive file-backed page linked list used to manage the file-backed pages.

A plurality of memory pages may be stored in a linked list. For example, the active file-backed page linked list may store a plurality of active file-backed pages, and the inactive file-backed page linked list may store a plurality of inactive file-backed pages. The active anonymous page linked list may store a plurality of active anonymous pages, and the inactive anonymous page linked list may store a plurality of inactive anonymous pages. An active memory page may be a memory page frequently referenced by a process, and an inactive memory page may be a memory page not frequently referenced by the process.

Optionally, each memory page corresponds to one use identifier (for example, a flag bit PG_referenced), and the identifier may indicate whether the memory page is referenced (referenced).

In embodiments of this application, referencing a memory page may also be referred to as accessing the memory page, invoking the memory page, or the like.

### 5.1 Linked list-based memory management mechanism in a case in which the memory page is referenced

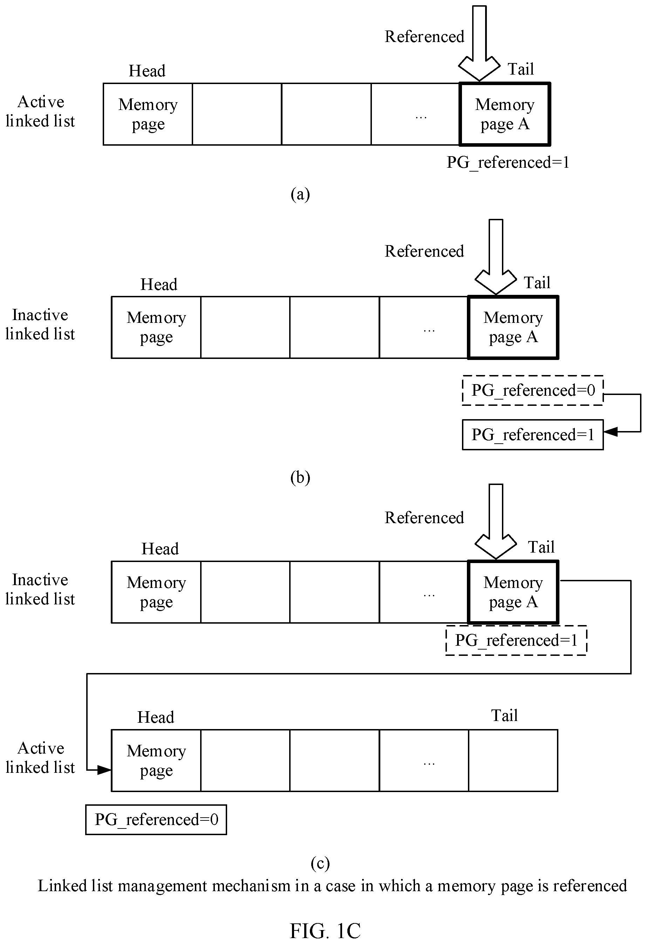

First, a mechanism for managing a memory page based on a linked list in a case in which the memory page is referenced is described. As shown in FIG. 1C, the electronic device may perform different operations based on a linked list (an active linked list or an inactive linked list) in which a referenced memory page is located and a previous usage identifier of the memory page.

As shown in (a) in FIG. 1C, if a memory page A in the active linked list is referenced, the electronic device sets PG_referenced of the memory page A to 1, indicating that the memory page A is referenced.

As shown in (b) in FIG. 1C, if a memory page A in the inactive linked list is referenced, and a previous flag bit PG_referenced of the memory page A is 0 (for example, the memory page A has not been referenced before), the electronic device sets the flag bit PG_referenced of the memory page A to 1, indicating that the memory page A is referenced.

As shown in (c) in FIG. 1C, if a memory page A in the inactive linked list is referenced, and a previous flag bit PG_referenced of the memory page A is 1 (for example, the memory page A has been referenced before), in this case, because the memory page A has been referenced before and is referenced again this time, a probability that the memory page A is referenced is high, and the electronic device may move the memory page A from the inactive linked list to the active linked list, and may set the flag bit PG_referenced to 0, indicating that the memory page A is not referenced after being moved to the active linked list.

### 5.2 Linked list-based memory management mechanism in a case in which a system memory is insufficient.

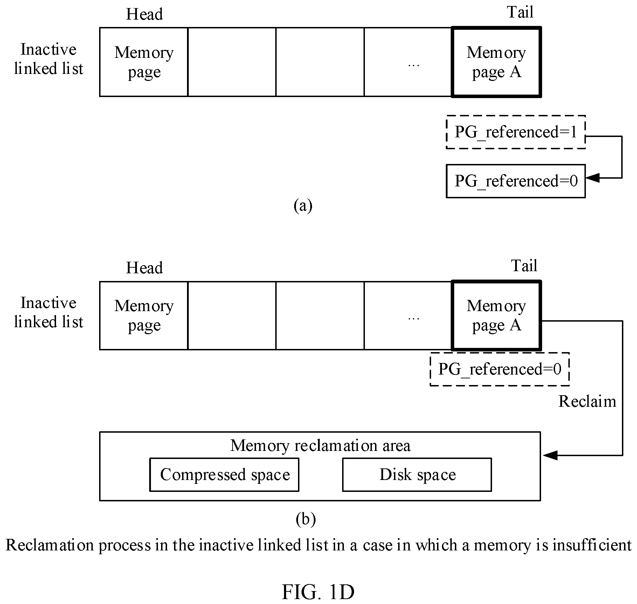

The following describes a mechanism for managing a memory page based on a linked list in a case in which a free memory is insufficient (for example, the free memory is lower than the watermark). As shown in FIG. 1D, when the memory of the electronic device is insufficient, memory page reclamation may be preferentially performed on the inactive linked list. In a possible implementation, the electronic device scans a memory page in the inactive linked list, and determines, based on a flag bit of the memory page, whether to reclaim the memory page.

A memory page A at a tail of the inactive linked list is used as an example. In an example shown in (a) in FIG.1D, a flag bit PG_referenced of the memory page A is 1, which means that the memory page A is referenced. In this case, it may be considered that a probability that the memory page A is referenced again in a short period of time is high. To avoid that the memory page A cannot be quickly found when the memory page A is referenced again in the short period of time, the electronic device skips the memory page A, does not reclaim the memory page, and sets the flag bit PG_referenced of the memory page A to 0.

In an example shown in (b) in FIG.1D, the flag bit PG_referenced of the memory page A is 0, which means that the memory page A is not referenced within specific time. In this case, to improve the free memory of the electronic device, the electronic device may reclaim the memory page A to a memory reclamation area. As the memory page at the tail of the inactive linked list is reclaimed, a memory page in the front of the inactive linked list is moved to the tail.

Optionally, the memory reclamation area includes but is not limited to compressed space (for example, zram) and disk space (for example, a hard disk).

In a possible implementation, that the electronic device reclaims the memory page to the compressed space may be implemented as: compressing the memory page, and storing a compressed memory page to the compressed space.

In a possible implementation, that the electronic device reclaims the memory page to the disk space may be implemented as: swapping (swapping) the memory page to the disk space.

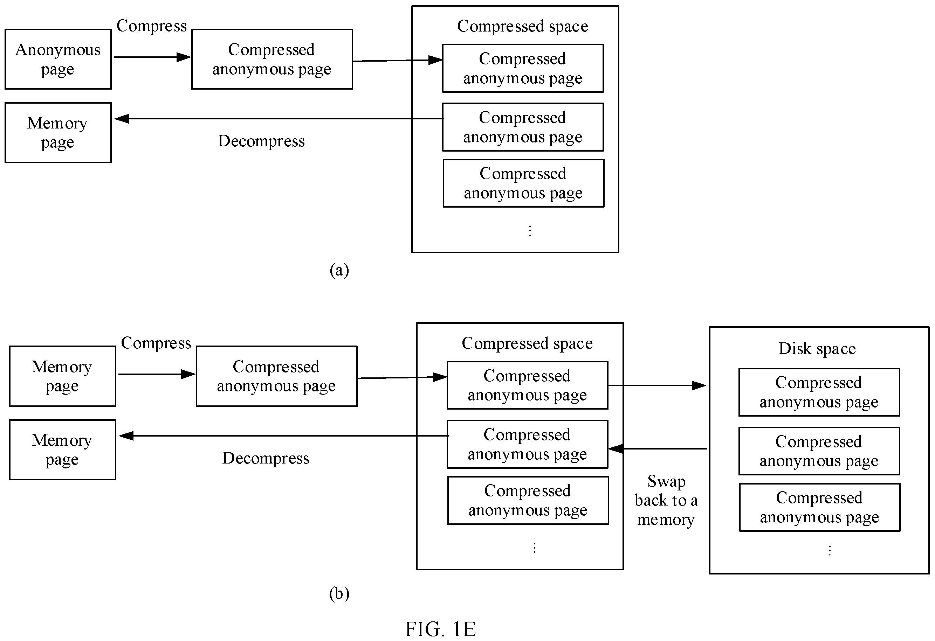

In some embodiments, the electronic device may reclaim, by using a page compression thread, some pages stored in the memory. Generally, the page compression thread reclaims the memory in a compression manner. For example, as shown in (a) in FIG. 1E, the anonymous page is compressed to obtain a compressed anonymous page, and the compressed anonymous page may be stored in the compressed space of the memory. Memory usage of the compressed anonymous page is less than memory usage of the corresponding anonymous page. In some scenarios, an allocated anonymous page (like an anonymous page that is not frequently referenced) in the memory may be further released. After being released, the anonymous page no longer occupies the memory. In this way, memory reclamation is implemented, and a free memory is increased for an application to use.

Subsequently, after a request that a process needs to use a compressed page is detected, as shown in (a) in FIG. 1E, the page may be decompressed from the compressed space, and a decompressed page is allocated to the process for use.

In some embodiments, the electronic device may reclaim, by using the page swap thread, the compressed page in the memory. A manner of reclaiming a memory by the page swap thread is to swap a compressed page in the memory (for example, the compressed space) to a disk. For example, as shown in (b) in FIG. 1E, the compressed anonymous page in the memory (for example, the compressed space) is swapped to the disk for storage, to reduce memory usage and facilitate subsequent memory allocation. For example, the page swap thread sends, through an input/output (input/output, I/O) interface, a compressed anonymous page stored in a double data rate (double data rate, DDR) synchronous dynamic random access memory (synchronous dynamic random access memory, SDRAM) to the disk for storage. In this way, memory usage in the DDR SDRAM is reduced, and an application can subsequently apply for the memory in the DDR SDRAM.

Subsequently, after a request that a process needs to use the swapped compressed page is detected, as shown in (b) in FIG. 1E, the compressed page (for example, the compressed anonymous page) in the disk space may be swapped back to the memory (for example, the compressed space) and decompressed, and a decompressed page is allocated to the process for use.

The foregoing swap process may also be understood as storing data in a random access memory (random access memory, RAM) in a read-only memory (read-only memory, ROM). In this way, a part of storage space of the ROM may be used as the RAM, and this implements expansion of storage space of the RAM. If a device whose RAM space is insufficient (for example, a mobile phone with a 2 G or 4 G memory), system freezing can be significantly reduced.

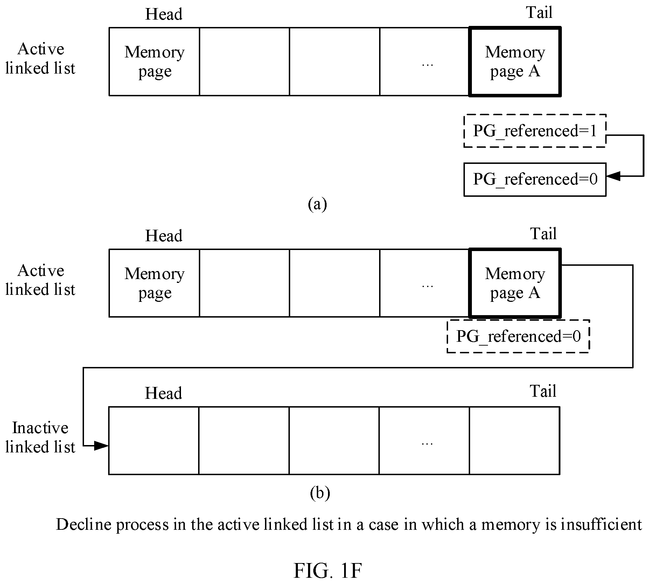

In a possible implementation, when the memory is insufficient, along with reclamation of a memory page in the inactive linked list, a memory page in the active linked list also has a decline process. As shown in FIG. 1F, a memory page A at a tail of the active linked list is used as an example. The decline process is as follows.
1. In the case shown in (a) in FIG.1F, if a flag bit PG_referenced of the memory page A is 1, the electronic device sets the flag bit PG_referenced of the memory page A to 0.
2. In the case shown in (b) in FIG.1F, a flag bit PG_referenced of the memory page A is 0, which means that the memory page A is not referenced within specific time. In this case, the electronic device may move the memory page A to the inactive linked list. As the memory page at the tail of the active linked list is moved out of the active linked list, a memory page in the front of the active linked list is moved to the tail.

In conclusion, a memory reclamation process may be simplified into the following steps: The memory page in the active linked list may be moved to the tail of the active linked list. In some cases, a memory page that is at the tail of the active linked list and that meets a condition is migrated to a head of the inactive linked list, to implement migration of the memory page between linked lists. The memory page in the inactive linked list may be migrated to the tail of the inactive linked list, and the electronic device may reclaim, from the tail of the inactive linked list, a memory page that meets the condition.

Generally, an application may run in a software system of the electronic device in a form of one or more processes. In some cases, some processes of the application may run in a foreground, and a process running in the foreground may usually have a visual interface. Because the foreground process is usually related to an interface visible to a user, running smoothness of the foreground process usually has large impact on smoothness of the electronic device. Similarly, when an application runs in the foreground, the application usually has a visual interface, and the foreground application has large impact on the smoothness of the electronic device.

In some cases, some processes of the application may run in the background. Although a background process usually does not have a visual interface, running of some background processes still has great impact on the smoothness of the electronic device. For example, although a background download task is not in the foreground, the background download task directly affects a response delay of the electronic device, and affects the smoothness of the electronic device. For another example, after a camera is tapped for image shooting, although a background processing process of an image is invisible, a processing speed of the background processing process affects image shooting experience of the user and the smoothness of the electronic device. Similarly, although some applications running in the background do not have visual interfaces, performance of the applications greatly affects the smoothness of the electronic device.

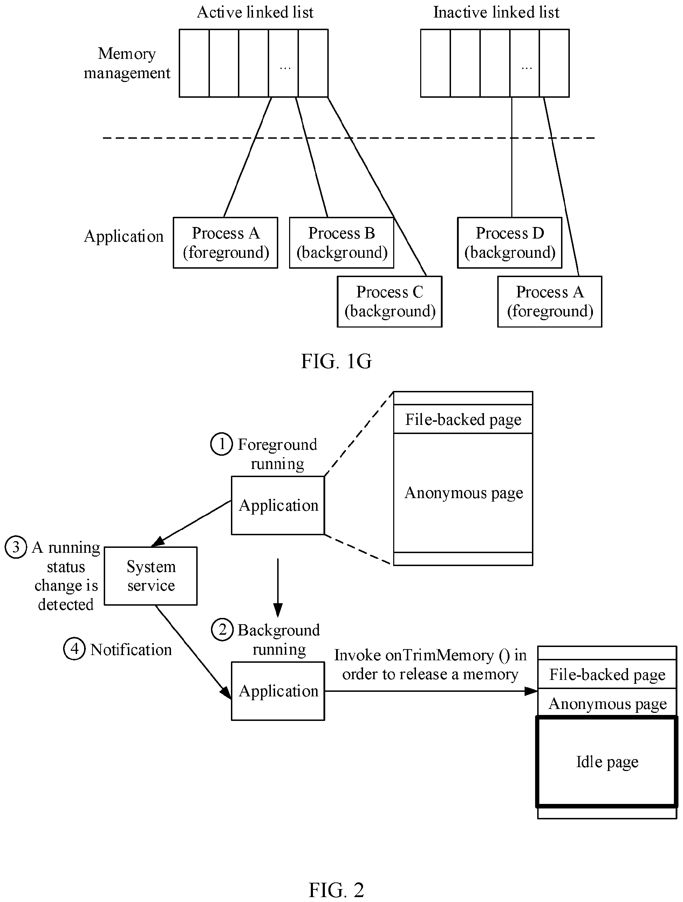

Currently, memories of applications may be managed by the operating system in a unified manner. The operating system may preferentially reclaim a memory page of a target application based on a frequency of referencing the memory page by the application, and the target application is an application that references the memory page at a low frequency. In this memory management solution, activeness of some background applications may be high, and accordingly, a frequency of referencing memory pages by the background applications increases. In this case, during memory reclamation, because a frequency of referencing a memory page by a background application is higher than a frequency of referencing a memory page by a foreground application, the memory page referenced by the foreground application is reclaimed, affecting performance of the foreground application, and further affecting running smoothness of the electronic device. Especially, when a memory specification (for example, 3G or 4G) of the electronic device is low, a probability that the memory page of the foreground application is reclaimed greatly increases, and user experience deteriorates sharply. For example, as shown in FIG. 1G, an application A to an application D are run on the electronic device. Because the background applications B, C, and D reference memory pages at a high frequency, and the foreground application A references a memory page at a low frequency, the memory page of the foreground application A may be reclaimed. Consequently, running performance of the foreground application A is affected, and further the smoothness of the electronic device is affected.

In addition, in this memory management solution, memories of some important background applications may also be reclaimed, and the smoothness of the electronic device may still be affected.

### 6. Framework-based memory management mechanism

In some solutions, when the system memory is insufficient, the system may determine, based on memory usage of applications, an application that needs to be killed (killed). Optionally, when the free memory is insufficient, the system preferentially kills an application with high memory usage. For example, if the application A occupies 1 G memory, the application B occupies 300 M memory, and the application C occupies 200 M memory, the system may preferentially kill the application A that occupies the most memory.

In addition to a global unified memory management mechanism provided by a kernel of the operating system, the operating system further provides a framework-based or interface-based memory management manner. For example, in an onTrimMemory^{®} mechanism or a Purgeable Memory^{®} mechanism of the Android open source project (Android open source project, AOSP), when an application is switched to the background for running, a memory that is temporarily not required by the application may be released. In this way, for a target application that has released a partial memory, because the target application has released the partial memory, a total memory occupied by the target application is reduced. When the memory of the electronic device is insufficient, because the target application has released the partial memory based on the Purgeable Memory mechanism, fewer memories are occupied, a probability that the target application is killed (killed) by the system is usually reduced, and a keepalive degree of the target application can be improved. In other words, the target application can survive longer in the system by actively releasing the partial memory. In this way, experience of using the target application by the user can be improved.

Optionally, the memory released by the electronic device includes a memory occupied by any one or more of the following data: a file, a picture, a dynamically generated view control, and the like.

The onTrimMemory mechanism is used as an example. The operating system may detect a running status of an application. When the memory of the electronic device is insufficient, and it is detected that an application in a specific running status exists, the operating system sends a communication message to the application in the specific running status. The application invokes an onTrimMemory interface in response to the notification message, so that a memory release method in the onTrimMemory interface can be performed, to release a partial memory.

The onTrimMemory interface is provided by the system, and an application developer (application developer for short) may implement the memory release method based on the onTrimMemory interface. For example, the application developer can rewrite the onTrimMemory interface and define the memory release method of the application in the onTrimMemory interface. Subsequently, in different cases, the application may invoke the onTrimMemory interface to release the memory of the application, to prevent the application from being directly killed by the system, and improve user experience in using the application.

For example, the onTrimMemory interface may be implemented in the following format:

```
         onTrimMemory ()
         {
         ...
         Memory release method
         ...
          }
```

The running status of the application may be shown in the following Table 1.

**Table 1**

| Running status | Descriptions |
|---|---|
| TRIM_MEMORY_UI_HIDDEN | All user interfaces (user interfaces, UIs) of the application are hidden. Generally, the application is switched to the background (for example, a desktop is switched to, or the current application exits by using a back button). |
| TRIM_MEMORY_RUNNING_MODERATE | The application runs normally and is not killed. However, the memory is currently low, and the system may start to kill (kill) a process. |
| TRIM_MEMORY_RUNNING_LOW | The application runs normally and is not killed. However, the memory is currently low. |
| TRIM_MEMORY_RUNNING_CRITICAL | The application runs normally, but the system starts to kill some cached processes according to a cache rule of an LRU linked list. In this case, the application needs to release an unnecessary memory as much as possible. Otherwise, the system may continue to kill other cached processes. |
| TRIM_MEMORY_BACKGROUND | The application is switched to the background and is at the bottom of the LRU linked list. There are other application processes before the application. Therefore, the application may not be killed currently. |
| TRIM_MEMORY_MODERATE | The application is switched to the background and is in the middle of the LRU list. If the memory of the mobile phone is still insufficient, the application may be killed. |
| TRIM_MEMORY_COMPLETE | The application is switched to the background and is in the front of the LRU list. In addition, the memory of the mobile phone is extremely low, and the application may be killed by the system at any time. |

For example, as shown in FIG. 2, initially, an application runs in the foreground, and a system service in the operating system detects a running status of the application. Subsequently, the application is switched to the background for running. When the system service detects that the application running in the foreground is switched to the running status TRIM_MEMORY_BACKGROUND (the application has been switched to the background for running), the system service sends a notification message to the application, and triggers the application to invoke the onTrimMemory interface, and perform the memory release method in the onTrimMemory interface, to release a partial memory, so as to reduce memory pressure of the system.

A specific quantity of memories can be released in the foregoing solution. However, the memory release method and the like in the onTrimMemory interface need to be implemented by the application developer. In other words, the system reclaims the memory to the application for execution. Therefore, a memory release effect depends on a development level and capability of the application developer to a large extent. In addition, because many application developers do not know which memories can be released, or for another reason, most applications are switched to the background and do not release memories, or a memory release effect is poor, or the system breaks down due to a memory release error.

For example, to ensure survival and user experience of an application developed by the application developer, the memory release method of the background application is not implemented in the onTrimMemory interface. In this way, when the overall memory of the system is insufficient, the system directly kills the background application with high usage.

In addition, a running status of each application changes at any time. It is very likely that the running status of the application suddenly deteriorates in a process of performing an onTrimMemory method of the application. Consequently, the application is killed due to high memory usage before the memory of the application is released, and therefore user experience in using the application is affected.

In conclusion, it can be learned that the current memory release method has a poor effect, and running performance of the electronic device cannot be ensured.

To resolve the foregoing technical problem, embodiments of this application provide a memory management method. In the method, an electronic device may detect a life cycle of an application, and process, based on a phase of the life cycle in which the application is located, memory data used by a functional module corresponding to the application. Because performance requirements of the application may be different in different phases of the life cycle, when the application is in different phases of the life cycle, manners of processing memory data of functional modules of the application may be different.

For example, when the application is in a background playing status, compression is performed on memory data (for example, memory data used by a render thread or a UI thread) used by a functional module that is of the application and that is used for interface display. When the application is in a background cache status, swapping is performed on the memory data used by the functional module that is of the application and that is used for interface display.

In this way, memory processing requirements of the application in different phases of the life cycle can be met. In other words, a memory can be processed based on the functional module of the application as efficiently as possible when a performance requirement of the application in a corresponding phase of the life cycle is met, to increase a free memory of the electronic device, so as to improve overall running performance of the electronic device.

The memory management method in embodiments of this application may be applied to the electronic device, for example, applied to an electronic device of an AOSP system or a similar system. Optionally, the electronic device may allocate the memory through mmap, a standard allocator, or a kernel allocator. For example, the electronic device may be, for example, a device that requires memory optimization, like a mobile phone, a tablet computer, a personal computer (personal computer, PC), or a netbook. A specific form of the electronic device is not specially limited in this application.

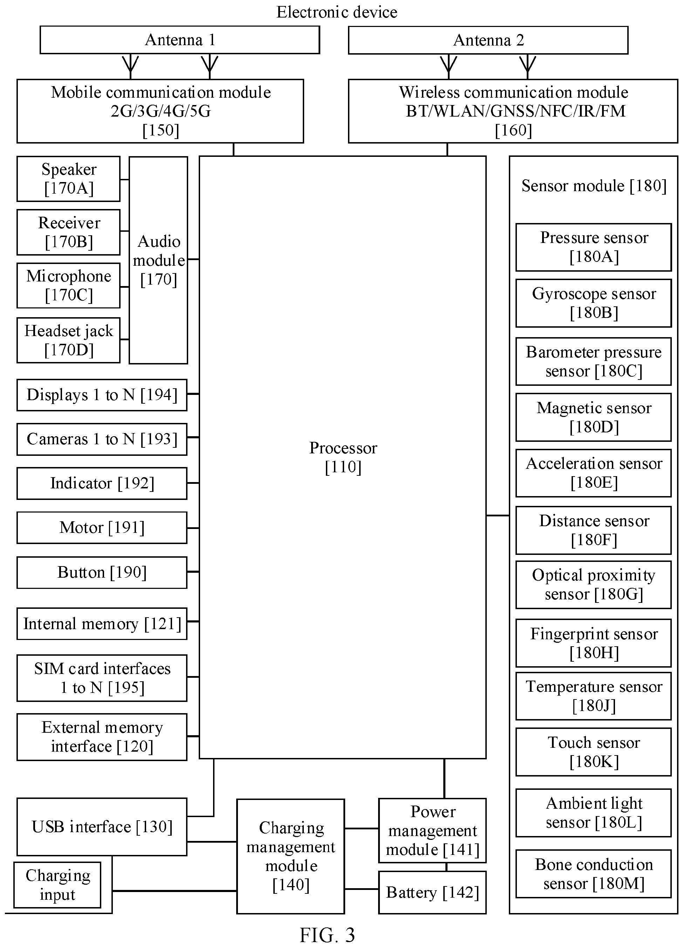

For example, the electronic device is a mobile phone. FIG. 3 is a diagram of a hardware structure of an electronic device 100a. For a structure of another electronic device, refer to the structure of the electronic device 100a.

The electronic device 100a may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100a. In some other embodiments of this application, the electronic device 100a may include more or fewer components than those shown in the figure, or some components may be combined, or some components may be split, or different component arrangements may be used. The illustrated components may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, 12C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is a port that conforms to a USB standard specification, and may be specifically a mini USB interface, a micro USB interface, a USB type-C interface, or the like. The USB interface 130 may be configured to connect to a charger to charge the electronic device 100a, or may be configured to transmit data between the electronic device 100a and a peripheral device. It can also be used to connect to a headset and play audio through the headset. The interface may be further configured to connect to another electronic device, for example, an AR device.

It may be understood that an interface connection relationship between the modules shown in this embodiment of the present invention is merely an example for description, and does not constitute a limitation on the structure of the electronic device 100a. In some other embodiments of this application, the electronic device 100a may alternatively use an interface connection manner different from that in the foregoing embodiment, or use a combination of a plurality of interface connection manners.

The charging management module 140 is configured to receive charging input from the charger. The charger may be a wireless charger, or may be a wired charger. In some embodiments of wired charging, the charging management module 140 may receive charging input from the wired charger through the USB interface 130. In some embodiments of wireless charging, the charging management module 140 may receive wireless charging input through a wireless charging coil of the electronic device 100a. When charging the battery 142, the charging management module 140 may further supply power to the terminal by using the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may also be disposed in the processor 110. In some other embodiments, the power management module 141 and the charging management module 140 may also be disposed in a same component.

A wireless communication function of the electronic device 100a may be implemented through an antenna 1, an antenna 2, a mobile communication module 150, a wireless communication module 160, a modem processor, a baseband processor, and the like.

The antenna 1 and the antenna 2 are configured to transmit and receive electromagnetic wave signals. Each antenna in the electronic device 100a may be configured to cover one or more communication frequency bands. Different antennas may be further multiplexed to improve antenna utilization. For example, the antenna 1 may be multiplexed as a diversity antenna of a wireless local area network. In other embodiments, the antenna may be used in combination with a tuning switch.

The mobile communication module 150 may provide a wireless communication solution that is applied to the electronic device 100a and includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave signal to the modem processor for demodulation. The mobile communication module 150 may further amplify the signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another function module.

The wireless communication module 160 may provide a wireless communication solution that is applied to the electronic device 100a, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments of this application, the electronic device 100a may establish a wireless connection to another terminal or server through the wireless communication module 160 (for example, a WLAN module) and the antenna 2, to implement communication between the electronic device 100a and the another terminal or server.

In some embodiments, the antenna 1 of the electronic device 100a is coupled to the mobile communication module 150, and the antenna 2 is coupled to the wireless communication module 160, so that the electronic device 100a can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100a may implement a display function through the GPU, the display 194, the application processor, and the like. The GPU is a microprocessor for image processing, and is connected to the display 194 and the application processor. The GPU is used to perform mathematical and geometric calculations, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100a may include one or N displays 194, where N is a positive integer greater than 1.

The electronic device 100a may implement an image shooting function by using the ISP, the camera 193, the video codec, the GPU, the display 194, the application processor, and the like.

The ISP is configured to process data fed back by the camera 193. For example, during image shooting, a shutter is opened, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100a may include one or N cameras 193, where N is a positive integer greater than 1.

The digital signal processor is configured to process a digital signal, and may process another digital signal in addition to the digital image signal. For example, when the electronic device 100a selects a frequency, the digital signal processor is configured to perform Fourier transformation on frequency energy.

The video codec is used to compress or decompress digital video. The electronic device 100a may support one or more video codecs. In this way, the electronic device 100a may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, a transfer mode between human brain neurons, and may further continuously perform self-learning. Applications such as intelligent cognition of the electronic device 100a may be implemented through the NPU, for example, image recognition, facial recognition, speech recognition, and text understanding.

The external memory interface 120 may be configured to connect to an external memory card, for example, a Micro SD card, to expand a storage capability of the electronic device 100a. The external memory card communicates with the processor 110 through the external memory interface 120, to implement a data storage function. For example, files such as music and videos can be saved on the external memory card.

The internal memory 121 may be configured to store computer-executable program code, where the executable program code includes instructions. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100a, and the like. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs instructions stored in the internal memory 121 and/or instructions stored in the memory disposed in the processor, to perform various function applications and data processing of the electronic device 100a.

The electronic device 100a can implement an audio function like music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100a may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100a, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. The electronic device 100a may be provided with at least one microphone 170C. In some other embodiments, two microphones 170C may be disposed in the electronic device 100a, to collect a sound signal and implement a noise reduction function. In some other embodiments, three, four, or more microphones 170C may alternatively be disposed in the electronic device 100a, to collect a sound signal, implement noise reduction, and identify a sound source, so as to implement a directional recording function and the like.

The headset interface 170D is configured to connect to a wired headset. The headset jack 170D may be a USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The button 190 includes a power button, a volume button, and the like. The button 190 may be a mechanical button. It can also be a touch button. The electronic device 100a may receive a button input, and generate a button signal input related to a user setting and function control of the electronic device 100a.

The motor 191 may generate a vibration prompt. The motor 191 may be used for an incoming call vibration prompt and a touch vibration feedback. For example, touch operations performed on different applications (such as photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. The touch vibration feedback effect can also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195, or removed from the SIM card interface 195, to implement contact and separation from the electronic device 100a. The electronic device 100a may support one or N SIM card interfaces, where N is a positive integer greater than 1. The SIM card interface 195 may support a nano-SIM card, a micro-SIM card, a SIM card, and the like. A plurality of cards may be inserted into the same SIM card interface 195 at the same time. Types of the plurality of cards may be the same or different. The SIM card interface 195 may also be compatible with different types of SIM cards. The SIM card interface 195 may also be compatible with an external memory card. The electronic device 100a interacts with a network through the SIM card, to implement functions such as calling and data communication. In some embodiments, the electronic device 100a uses an eSIM, namely, an embedded SIM card. The eSIM card may be embedded in the electronic device 100a, and cannot be separated from the electronic device 100a.

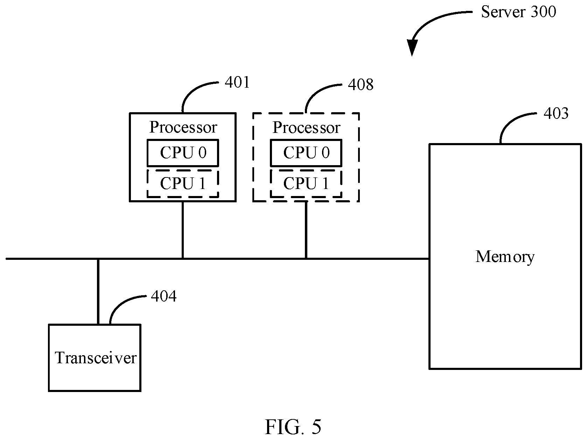

It should be noted that, for a structure of the electronic device, refer to the structure shown in FIG. 5. The electronic device may have more or fewer components than the structure shown in FIG. 5, or combine some components, or split some components, or have different component arrangements. The illustrated components may be implemented in hardware, software, or a combination of software and hardware.

Optionally, a software system of the electronic device 100a may use a layered architecture, an event-driven architecture, a microkernel architecture, a microservice architecture, or a cloud architecture. In this embodiment of the present invention, an Android^{®} system with a layered architecture is used as an example to describe the software structure of the electronic device 100a.

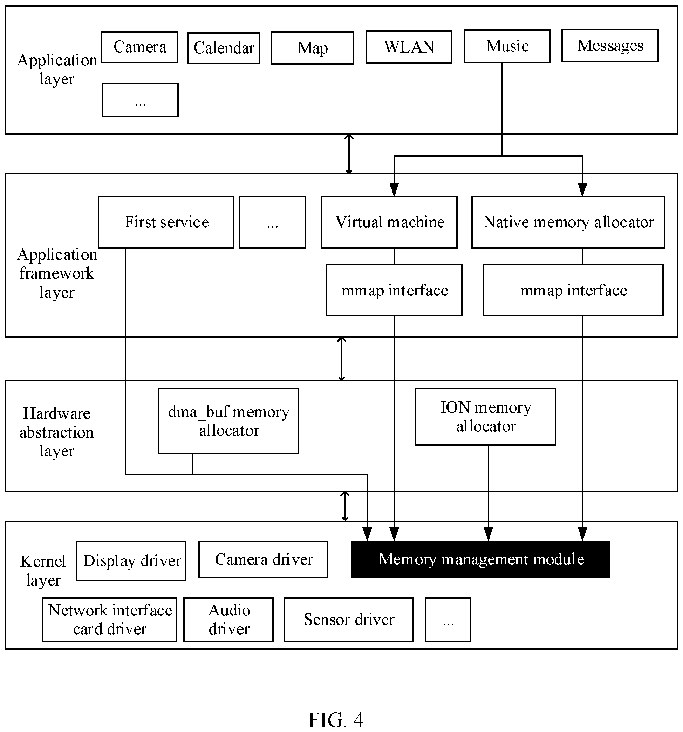

FIG. 4 is a block diagram of a software structure of an electronic device 100a according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Call, Map, Navigation, WLAN, Bluetooth, Music, Videos, and Messages.

One or more applications may run in the electronic device, and each application has at least one corresponding process. One process has at least one thread executing a task (task). In other words, a plurality of threads run in the electronic device. The threads include a Java thread and a C/C++ thread.

To ensure normal running of a thread, the electronic device may allocate a processing unit (for example, a CPU core) to the thread according to a specific policy. After the processing unit is allocated to the thread, the thread may execute a corresponding task through the processing unit.

The application framework layer provides an application programming interface (application programming interface, API) and a programming framework for an application at the application layer. The application framework layer includes some predefined functions.

As shown in FIG. 4, the application framework layer may include a first service, a virtual machine, a direct memory allocator, and an mmap interface.

The first service is used to detect a running status of an application, and send a notification message to a memory management module at the kernel layer when it is detected that the running status of the application is switched. Optionally, the notification message indicates the running status of the application. After receiving the notification message, the memory management module manages a memory of one or more functional modules of the application based on the running status of the application.

To be specific, in this embodiment of this application, a memory of each functional module may be managed based on a granularity of a functional module or a service type in the application. For example, for a first component of the application, a memory of the first component is managed in a first manner. For a second component of the application, a memory of the second component is managed in a second manner.

Optionally, the functional module of the application includes but is not limited to one or more of the following: a component, a thread, a method (method), a class (class), an object (object), a surface (which may correspond to a memory area, where the memory area stores information about a to-be-displayed image on a screen), and media.

Optionally, the component includes but is not limited to any one or more of the following: an activity (activity), a fragment (fragment), a service (service), a content provider (ContentProvider), and a broadcast receiver.

Optionally, the thread of the application includes but is not limited to one or more of the following: a render (Render) thread and a user interface (user interface, UI) thread.

In some examples, different functional modules may correspond to different service types. For example, a service type corresponding to the render thread and the UI thread may be interface display.

Optionally, the running status of the application includes but is not limited to any one or more of the following: a foreground running status, a background playing status, a background service status, a background cache status, a shallow frozen status, and a deep frozen status.

The foreground running status means that the application is running in a foreground. In this running status, the application may usually present a graphical interface (for example, a UI), and a user may interact with the application through the UI.

The background playing status means that the application is switched to a background for running and no graphical interface is presented, but a function or task of the application is still running. For example, a music application runs a music playing task in the background, and a navigation application runs a navigation task in the background.

The background service status refers to a background service application. The background service application mainly implements background data collection, message push, or a resident interruption waiting service, for example, a Bluetooth connection. For another example, the application may push a message in the background. For still another example, the application may collect some data, to push some messages to the user.

The background cache status means that after the application is switched to the background, the application usually no longer runs a task, and the user does not operate the application in a short period of time (for example, first duration). The application resides in the background of the system to mainly ensure that a previous browsing record of the application running in the foreground can be retained when the application is switched from the background to the foreground. In this way, the user can continue to operate the application and browse corresponding content.

The shallow frozen status means that after the application is switched to the background, the application no longer runs a task, and the user has not operated the application for a specific period of time (for example, second duration). In the running status, the background application responds to a system behavior only when some specific system events occur, for example, responds to the system to perform resolution conversion. The second duration is greater than the first duration.

The deep frozen status means that after the application is switched to the background, the application no longer runs a task, and the user has not operated the application again within a long period of time (for example, third duration). In this running status, the background application no longer responds to the system behavior, and the application totally enters a non-running status. The third duration is greater than the second duration.

It should be noted that in three running statuses, namely, the background cache status, the shallow frozen status, and the deep frozen status, the application does not run a task, and a difference between the three statuses lies in duration in which the application resides in the background. When the application resides in the background and does not run a task for short duration (for example, the first duration), the running status of the application is the background cache status. When the application resides in the background and does not run a task for long duration (for example, the second duration), the running status of the application is the shallow frozen status. When the application resides in the background and does not run a task for very long duration (for example, the third duration), the running status of the application is the deep frozen status. When the application is in the background cache status, if the application is still not operated by the user (not running a task) after the second duration expires, the application may be switched to the shallow frozen status. When the application is in the shallow frozen status, if the application is still not operated by the user (not running a task) after the third duration expires, the application may be switched to the deep frozen status.

In this embodiment of this application, the electronic device may detect the running status of the application, and perform memory, based on the running status of the application, on the memory referenced by the functional module of the application. For example, when the first service detects that the music application is switched from the background service status to the background cache status, the first service may send a notification message to the memory management module at the kernel layer, to indicate a running status of the music application. After receiving the notification message, the memory management module manages a memory of one or more functional modules of the music application based on the running status of the music application. For example, when it is detected that the running status of the music application is switched to the background playing status, because the music application may be switched back to the foreground for running in a short period of time, the memory management module may compress a memory page of a functional module used for display to obtain a compressed memory page, so that when the application is switched back to the foreground, the memory page can be quickly decompressed and used to implement an interface display function.

For another example, switching the running status of the music application to the background cache status means that a probability that the user switches the application back to the foreground is low. To save memory space, the memory management module may perform a swap operation on the compressed memory page of the functional module used for display, for example, swap (or referred to as flush) the compressed memory page to a storage component (like a flash)

Optionally, when the application is in the background cache status, the memory management module may further perform a compression operation on memories of some other functional modules (functional modules other than the functional module used for display) of the application. In this way, based on features and running requirements of different functional modules of a same application, memories of the different functional modules are processed in different manners, to ensure performance of the application in a corresponding running status as much as possible, and improve a free memory of the electronic device.

For example, when the application is in the background playing status, because the application no longer displays a graphical interface, the electronic device may compress memory data used by the functional module (for example, the render thread) that is of the application and that is used for interface display, and does process memory data used by some functional modules (for example, a service) that support background running. In this way, normal running of the application in the background playing status can be ensured as much as possible, and the free memory of the electronic device can be improved.

The virtual machine is configured to manage an on-heap memory. In a possible implementation, the virtual machine invokes the mmap interface to allocate the on-heap memory. The operating system records the on-heap memory allocated by the virtual machine.

The direct memory allocator is configured to allocate a direct memory. In a possible implementation, the virtual machine invokes the mmap interface to allocate the direct memory.

A hardware abstraction layer (hardware abstraction layer, HAL) includes a streaming media memory allocator. The streaming media memory allocator is configured to allocate a streaming media memory. Optionally, the streaming media memory allocator includes a dma_buf memory allocator or an ION memory allocator.

The kernel layer is a layer between hardware and software. The kernel layer may include at least a display driver, a camera driver, an audio driver, and a sensor driver.

In some embodiments of this application, the kernel layer may include the memory management module, configured to manage memories of the application. For example, after the notification message (indicating the running status of the application) is received from the first service, the memory management module manages the memory of the one or more functional modules of the application based on the running status of the application.

It should be noted that the software architecture shown in FIG. 4 is merely an example. A software architecture of the electronic device may alternatively be in another form. For example, the first service is deployed at another layer. The software architecture of the electronic device is not limited in embodiments of this application.

FIG. 5 shows another possible structure of an electronic device. The electronic device may include a processor 401 (optionally, including a processor 408), a memory 403, a transceiver 404, and the like.

A path may be included between the foregoing components, and is used to transmit information between the foregoing components.

The transceiver 404 is configured to communicate with another device or a communication network through a protocol like the Ethernet or a WLAN.

For detailed content of the processor and the memory, refer to descriptions of related structures in the electronic device in FIG. 2. Details are not described herein again.

The following describes in detail the technical solutions provided in embodiments of this application. Optionally, a physical memory in the electronic device may be divided into a plurality of memory units. Optionally, the memory unit includes but is not limited to a memory page. The following embodiments are mainly described by using an example in which the memory page is a memory unit. However, the technical solutions in embodiments of this application are not limited thereto.

In embodiments of this application, a life cycle of an application may be detected, and a memory is managed based on the life cycle of the application. For example, for memory data that is not used in a short period of time, the memory data may be compressed, and stored in compressed space, to save partial memory space. For compressed memory data (for example, a compressed memory page) that is not used for a long period of time, the compressed memory data may be swapped, for example, swapped to disk space (for example, a flash component) by using a flushing mechanism.

Optionally, the life cycle of the application includes one or more of the following running phases: foreground running, background playing, background service, background cache, shallow frozen, and deep frozen. That the application is in the foreground running phase may mean that a running status of the application is a foreground running status. Similarly, that the application is in the background playing phase may mean that the running status of the application is a background playing status. That the application is in the background service phase may mean that the running status of the application is a background service status. That the application is in the background cache phase may mean that the running status of the application is a background cache status. That the application is in the shallow frozen phase may mean that the running status of the application is a shallow frozen status. That the application is in the deep frozen phase may mean that the running status of the application is a deep frozen status.

The following describes the life cycle of the application and the technical solutions in embodiments of this application with reference to the accompanying drawings.

A navigation application in a mobile phone is used as an example. As shown in FIG. 6, it is assumed that the navigation application initially runs in a foreground. To ensure normal running of the navigation application in the foreground, the mobile phone may not process a memory of the navigation application.

At a moment t1, the mobile phone detects an operation performed by a user for switching the navigation application to a background for running. It is assumed that the navigation application still runs a navigation function in the background, for example, determining a navigation route and playing a navigation route voice. In this case, it is determined that the navigation application enters the background playing status. When the navigation application runs in the background, a graphical interface is no longer displayed (a display function is no longer executed). Therefore, a memory related to interface display may be processed.

In addition, because the navigation application may be switched back to the foreground for running in a short period of time, in a possible implementation, when the application is in the background playing status (in this case, although the application runs in the background, some core functions may still be executed), processing the memory related to interface display may be implemented as follows: Memory data that is of the application and that is related to interface display is compressed to obtain compressed memory data related to interface display, and the compressed memory data related to interface display is stored in compressed space, instead of being swapped to disk space (for example, a flash component). In this way, it can be avoided that the application is delayed to switch back to the foreground for running due to long time consumption caused by re-reading data from a disk.

For example, as shown in FIG. 6, in a time period from t1 to t2, the mobile phone may process the memory data related to interface display. The memory data related to interface display includes but is not limited to memory data related to a user interface thread and memory data related to a render thread.

Then, at a moment t2, the mobile phone detects the navigation application running in the background, and the navigation application no longer runs core functions such as navigation. For example, a current navigation task is complete, and the user does not add a new navigation task. In this case, the mobile phone may determine that the navigation application enters the background service status. When the navigation application is in the background service status, the navigation task/function is no longer run. Therefore, the mobile phone may process memory data related to the core functions such as navigation based on previous memory processing (namely, processing of the memory data related to interface display). The navigation function includes but is not limited to determining a navigation route and playing a navigation audio.

Optionally, processing the memory data related to the core functions such as navigation may be implemented as: compressing the memory data related to the core functions such as navigation, and storing compressed memory data related to the core functions such as navigation into the compressed space.

For example, as shown in FIG. 6, in a time period from t2 to t3, when the memory data (for example, the memory data related to the render thread or the memory data related to the user interface thread) related to interface display has been processed, the mobile phone may further process the memory data related to the core functions (for example, navigation) of the application, the memory data related to the navigation function includes but is not limited to memory data related to a surface thread and memory data related to a media thread.

As time for the navigation application to run in the background becomes longer, for example, at a moment t3, duration in which the navigation application runs in the background reaches first duration. In this case, the navigation application enters the background cache status. When the application is in the background cache status, there is a low probability that the user switches the navigation application back to the foreground. Therefore, to save more memory space, in a possible implementation, the mobile phone may swap the memory data that is of the navigation application and that is used for interface display to the disk space (for example, a flash component).

For example, as shown in FIG. 6, in a time period from t3 to t4, the mobile phone swaps the memory data related to interface display (for example, the memory data related to the render thread and the memory data related to the user interface thread) into the disk space.

Optionally, because in the time period from t3 to t4 (the navigation application is in the background cache status), a probability that the user operates the navigation application in a short period of time is low, or the user may no longer need the navigation application to provide a background service in a short period of time, the mobile phone may compress memory data used by the service. Similarly, as shown in FIG. 6, in the time period from t3 to t4, the mobile phone may further compress related memory data used by the media and the surface.

The navigation application continues to run in the background. At a moment t4, if duration in which the navigation application runs in the background reaches second duration, the navigation application enters the shallow frozen status. In this status, a possibility that the navigation application is active in the background is greatly reduced. Therefore, in a possible implementation, the mobile phone may fully swap memory data other than on-heap memory data of a Java virtual machine to the disk space (for example, a flash component).

For example, as shown in FIG. 6, in a time period from t4 to t5, the mobile phone swaps the memory data related to the user interface thread, the render thread, the surface, the media, and the service to the disk space. In this way, a memory of an inactive background application can be processed as much as possible, to increase a quantity of free memories of the entire mobile phone, so as to improve running performance of the entire mobile phone.

The navigation application continues to run in the background. At a moment t5, if duration in which the navigation application runs in the background reaches third duration, the navigation application enters the deep frozen status. If the navigation application is in the deep frozen status, it indicates that the navigation application is not used by the user again in a long period of time. Based on this, the mobile phone may predict that the navigation application is still not used by the user again in a long period of time in the future. To reduce a large quantity of memories occupied by the inactive background application, the mobile phone may compress the on-heap memory data of the Java virtual machine of the navigation application in the deep frozen status, and store compressed on-heap memory data to the compressed space. In this way, memory usage of the on-heap memory data can be reduced. In addition, because the on-heap memory data is compressed to the compressed space (not swapped to the flash component), when a process subsequently wants to use the on-heap memory data, the compressed on-heap memory data only needs to be decompressed, and the on-heap memory data does not need to be swapped back from the disk space, so that a delay caused by swapping back the on-heap memory data can be avoided, and frame freezing can be reduced when the user switches the navigation application back to the foreground.

For example, as shown in FIG. 6, in a time period from t5 to t6, when the mobile phone swaps the memory data related to the user interface thread, the render thread, the surface, the media, and the service to the disk space, the on-heap memory data (such as memory data related to a method, a class, and an object) of the Java virtual machine can be compressed, and a compression result can be stored in the compressed space.

In the foregoing solution, the electronic device may detect the life cycle of the application, and process, based on a phase of the life cycle in which the application is located, memory data used by some functional modules corresponding to the application.

First, because memory processing is performed based on a granularity of a functional module of the application, precision of memory processing is higher. In some scenarios, the memory data used by the some functional modules (for example, a functional module that is not used temporarily) of the application is processed, without affecting normal running of the entire application, so that a keepalive degree of the application can be improved, and a probability that the application is killed or abnormally exited can be reduced. For example, for some background applications, the electronic device may process only a memory referenced by some functional modules of the background applications. In this way, when survival of the background applications is ensured as much as possible, the memory of the applications is released to a large extent. This enhances smoothness and stability of the electronic device (avoiding memory thrashing), and improves memory management efficiency of the electronic device.

Second, in the conventional technology in which an onTrimMemory mechanism is relied on and an application is expected to actively release memory data, the application actually does not release the memory data, and memory pressure of a system is still high. By comparison, in the technical solutions in this embodiment of this application, the application does not need to actively release the memory data. Specifically, in this embodiment of this application, when detecting that the application is in a corresponding phase of the life cycle, the electronic device may automatically process the memory data of the some functional modules of the application. In this way, memory pressure of the system is relieved. In addition, the electronic device processes the corresponding memory data from the some functional modules of the application, so that a total memory occupied by the application is reduced. Therefore, a probability that the application is killed or abnormally exited is greatly reduced.

In addition, when the application is in different phases of the life cycle, manners of processing memory data of functional modules of the application may be different. In this way, memory processing requirements of the application in different phases of the life cycle can be met. In other words, a memory can be processed based on a functional module of the application as much as possible when a performance requirement of the application in a corresponding phase of the life cycle is met, to increase a free memory of the electronic device, so as to improve overall running performance of the electronic device.

The following describes technical details in embodiments of this application.

The electronic device may implement memory management based on a virtual memory (virtual memory) technology. A thread initiates a memory allocation request. After receiving the memory allocation request, the electronic device allocates a virtual memory area (virtual memory area, VMA) and a physical memory to the thread through a memory allocator. There is a mapping relationship (or referred to as an association relationship) between a virtual address of the VMA of the thread and a physical address of the physical memory. Optionally, the physical memory may include one or more linked lists, and each linked list includes one or more memory pages.

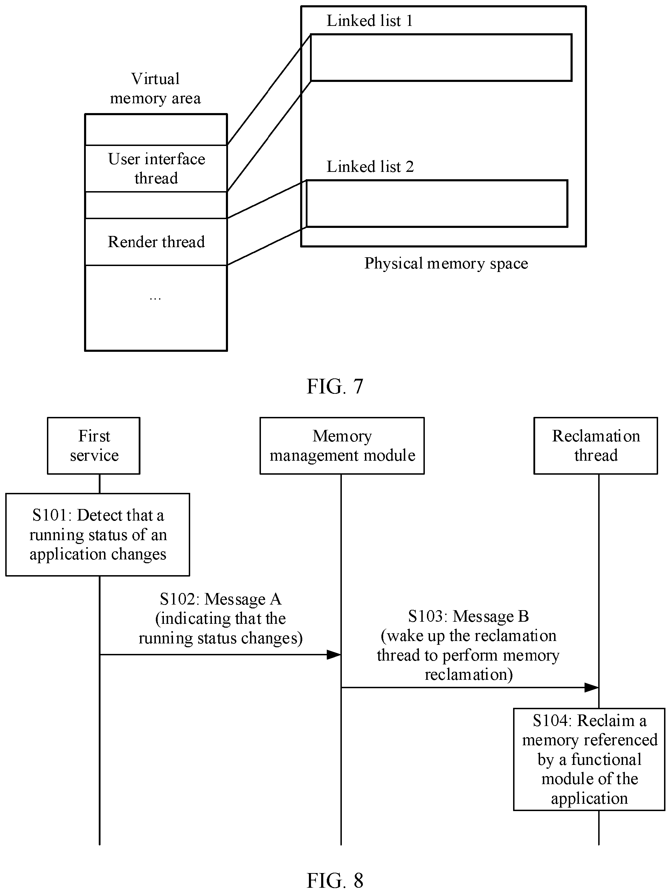

Optionally, the electronic device may mark the allocated VMA. For example, FIG. 7 shows VMAs allocated by the memory allocator of the electronic device to a user interface (UI) thread and a render thread. A VMA corresponding to the UI thread and a VMA corresponding to the render thread may have different identifiers, to distinguish between the threads associated with the VMAs. In some examples, after marking the VMA, the memory allocator may transfer identification information of the VMA to a memory management module, and the memory management module may distinguish, based on the identification information of the VMA, between threads associated with different VMAs.

Optionally, the electronic device may further mark a memory page in the allocated physical memory. For example, different marks are set for memory pages referenced by different functional modules. For example, a mark of a memory page referenced by the UI thread is set to a mark 1, and a mark of a memory page referenced by the render thread is set to a mark 2. In this way, functional modules (for example, threads) or service types associated with different memory pages may be distinguished.

After a VMA is allocated to a thread, the thread may apply for a memory page to which the VMA is mapped. In a possible implementation, a virtual address A' of a to-be-referenced memory page may be carried in a use request, and the virtual address A' includes an offset (offset). The electronic device may obtain, by querying a page table, a base address of a physical address A corresponding to the virtual address A', calculate the physical address A based on the base address and the offset in the virtual address A', and further address the physical address A of the memory page, so that the thread can use a memory page in the physical address A.

Similarly, for a process in which the electronic device allocates a VMA and a physical memory to another functional module of the application, refer to related descriptions of allocating, by the electronic device, the VMA and the physical memory to the thread of the application.

In some scenarios, if it is detected that a running status of the application changes, the electronic device may manage, based on the running status of the application, memory data used by one or more functional modules of the application.

FIG. 8 shows an example procedure of a memory management method according to an embodiment of this application. As shown in FIG. 8, the method includes the following steps.

S101: A first service detects that a running status of an application changes.

Optionally, the first service is located at a framework layer.

S102: The first service sends a message A to a memory management module.

The message A indicates that the running status changes.

It should be noted that, in this embodiment of this application, that a message is used for a function means that the message may be used for the function, but the message is not dedicated to the function.

Optionally, the memory management module is located at a kernel layer.

S103: The memory management module sends a message B to a processing thread.

The message B indicates the processing thread to perform memory processing.

S104: In response to the message B, the processing thread reclaims a memory referenced by a functional module of the application.

In a possible implementation, the processing thread processes, based on a functional module (or a service type) associated with a memory page, a memory page referenced by the application. Optionally, for a running status, the processing thread processes as many non-critical memory pages (or referred to as unimportant memory pages) referenced by the application as possible, and processes as few critical memory pages as possible. A manner of classifying a critical memory page and a non-critical memory page is related to a functional module (or a service type) associated with a memory page in a specific running status.

For example, for a foreground application, all memory pages referenced by the application may be considered as critical memory pages. For an application in a background playing status, because the application no longer displays a UI in a foreground, a service related to interface display is considered as a non-critical service, in other words, an application functional module related to interface display is considered as a non-critical functional module. Correspondingly, a memory page related to interface display (for example, a memory page referenced by a UI thread, a render thread, or a layer composition thread) may be considered as a non-critical memory page. Correspondingly, for the application in the background playing status, an electronic device may process as many memory pages related to interface display as possible, to reduce memory pressure of the electronic device and improve performance of the electronic device.

For another example, for an application in a background cache status, a memory page related to interface display, a surface, media, and a service may be considered as non-critical memory pages. The electronic device may process the non-critical memory pages. Optionally, there may be two types of non-critical memory pages: a memory page that is not referenced in a short period of time, and a memory page that is not referenced in a long period of time. For the non-critical memory page that is not referenced in a short period of time (for example, a memory page referenced by the surface, the media, or the service in the background cache status), the electronic device may compress the non-critical memory page, and store the non-critical memory page in compressed space. For the non-critical memory page that is not referenced in a long period of time (for example, the memory page related to interface display in the background cache status), the electronic device may swap the non-critical memory page, and store the non-critical memory page in disk space.

In the conventional technology in which memory processing is triggered by setting a watermark, there is a high probability that a quantity of processed memories does not match an actual memory usage requirement of the electronic device. By comparison, according to the memory management method provided in this embodiment of this application, critical services (or critical functional modules) and non-critical services (or non-critical functional modules) corresponding to an application in different running statuses can be determined. Based on the critical service and the non-critical service, the electronic device does not process a memory (critical memory) that actually needs to be referenced by the critical service of the application, and the electronic device processes a memory (namely, a non-critical memory) that actually does not need to be referenced by the critical service (or the critical functional module) of the application. In this way, the actual memory usage requirement of the application can be matched, and an appropriate quantity of memories can be processed.

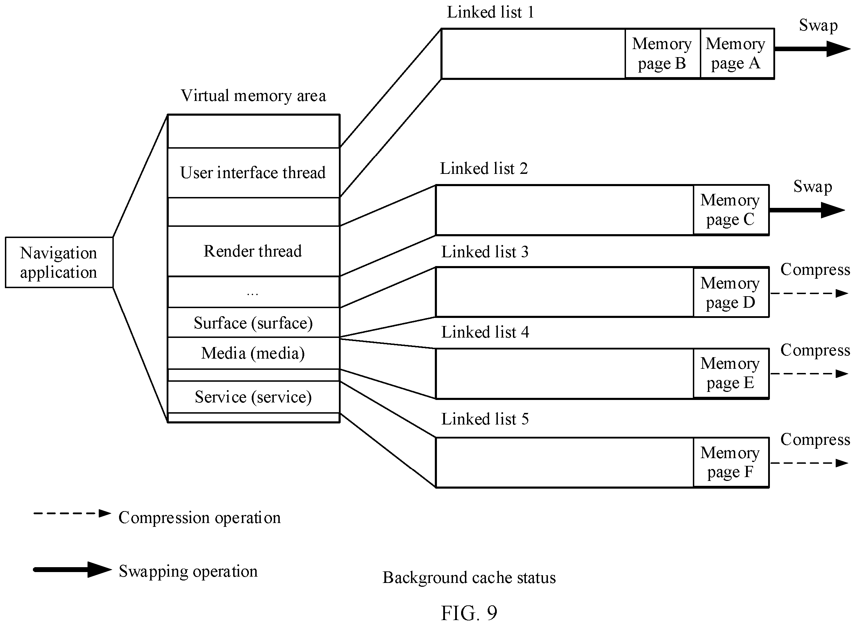

The following uses a navigation application as an example to describe a memory processing process of the processing thread. In an example, if it is detected that a running status of the navigation application is switched from a background service status to the background cache status, the electronic device may wake up the processing thread (for example, kswapd). For example, as shown in FIG. 9, the processing thread may process, based on a current running status of the navigation application, a memory referenced by one or more functional modules of the application. In a possible implementation, the processing thread may scan, based on a VMA of a UI thread of the navigation application, a linked list 1 to which the VMA is mapped; scan, based on a VMA of a render thread of the navigation application, a linked list 2 to which the VMA is mapped; scan, based on a VMA of a surface of the navigation application, a linked list 3 to which the VMA is mapped; scan, based on a VMA of media of the navigation application, a linked list 4 to which the VMA is mapped; and scan, based on a VMA of a service of the navigation application, a linked list 5 to which the VMA is mapped.

For a memory page (namely, a memory page related to running of the UI thread) that is in the linked list 1 and that meets a processing condition, because the navigation application has been running in the background for a long period of time, a probability that the navigation application is switched back to the foreground for running in a short period of time is very low. Therefore, the processing thread may swap compressed memory pages (for example, memory pages A and B) related to the UI thread into the disk space. Similarly, for a memory page (namely, a memory page related to running of the render thread) that is in the linked list 2 and that meets the processing condition, the processing thread may swap the memory page (for example, a memory page C) into the disk space.

For a memory page (a memory page related to the surface) that meets the processing condition and that is in the linked list 3, because a probability of operating the navigation application by a user in a short period of time is low, the processing thread may compress the memory page (for example, a memory page D) into the compressed space. Similarly, the processing thread may compress a processable memory page (a memory page related to the media) in the linked list 4 into the compressed space, and compress a processable memory page (a memory page related to the service) in the linked list 5 into the compressed space.

It should be noted that FIG. 9 is described by using an example in which a VMA of one functional module corresponds to one linked list. In some other embodiments, a VMA of one functional module may correspond to a plurality of linked lists, or VMAs of a plurality of functional modules correspond to one linked list, or VMAs of a plurality of functional modules correspond to a plurality of linked lists. For example, VMAs of the UI thread and the render thread of the application are mapped to the linked list 1, and a VMA of another functional module of the application is mapped to the linked list 2. A mapping relationship between a VMA of a functional module and a physical memory is not limited in embodiments of this application.

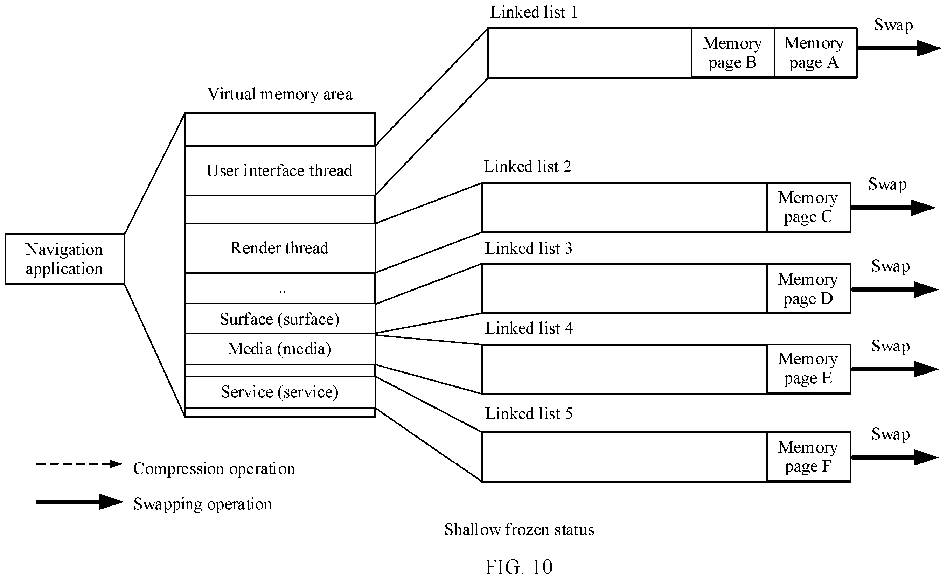

For another example, as shown in FIG. 10, if it is detected that the running status of the navigation application is switched to a shallow frozen status, the electronic device may wake up the processing thread, and the processing thread may process, based on the current running status of the navigation application, the memory referenced by the one or more functional modules of the application. For example, the processing thread may scan, based on the VMA of the UI thread of the navigation application, the linked list 1 to which the VMA is mapped, and swap a memory page (namely, a memory page referenced by the UI thread) that is in the linked list 1 and that meets the processing condition into the disk space. Similarly, the processing thread may swap a memory page (for example, a memory page referenced by the render thread, the surface, the media, or the service) referenced by another functional module of the navigation application.

The foregoing mainly uses an example in which after the application switches the running status, the electronic device may process a partial memory of the application based on the running status of the application. In some other embodiments, after the application switches the running status, the electronic device may delay processing. In other words, the electronic device may perform memory processing after a period of time since the running status of the application is switched, to ensure that the running status of the application is stable. For example, as shown in FIG. 11, the application enters the background playing status at a moment t1. To prevent the user from switching the application back to the foreground for running in a short period of time, the electronic device may delay processing for a period of time. For example, if delay duration is t1-t1', and in a time period from t1 to t1, the user does not switch the application back to the foreground for running, the electronic device predicts that the application may not be switched back to the foreground in a short time period in the future. In this case, the electronic device may process a memory (for example, a memory referenced by the render thread or the UI thread) related to interface display at a moment t1'.

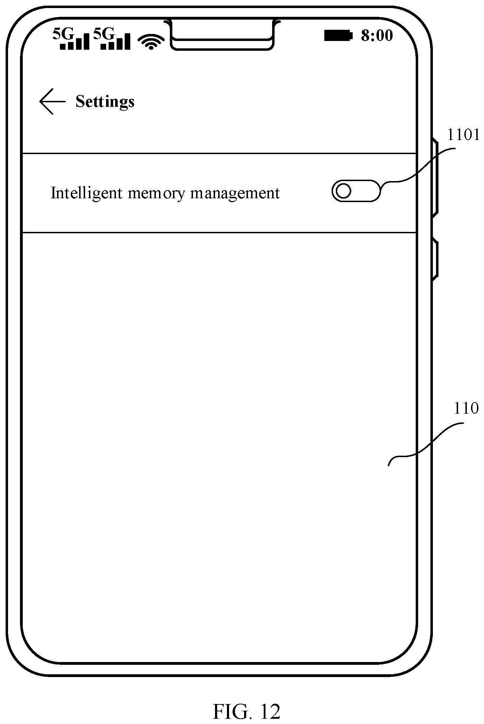

In some embodiments, the electronic device may provide a setting portal for memory management, and the user may set a function related to memory management by using the setting portal. For example, as shown in FIG. 12, the electronic device displays a setting interface 110 (an example of a first interface). The interface 110 includes a setting option 1101, and the setting option 1101 is used to enable or disable a memory management function. After the memory management function is enabled, the electronic device may manage, based on the running status of the application and by using a functional module as a granularity, the memory referenced by the one or more functional modules of the application. Alternatively, in some other embodiments, the electronic device may always enable the memory management function. Alternatively, the electronic device may automatically enable the memory management function when a specific condition is met.

The following Table 2 shows performance indicators of the electronic device in a case in which the memory management function is enabled and a case in which the memory management function is disabled.

**Table 2**

| Performance indicator | | Disable the memory management function | Enable the memory management function |
|---|---|---|---|
| Average quantity of background keep-alive applications | | 11.38 | 22 |
| Average quantity of intervals (another application is restarted) | | 9 | 20 |
| Launch rate | | 0.87 | 0.96 |
| Heavy duty camera-start | Hot start | 1607.64 | 1664.03 |
| | Cold start | 1597.55 | 1560.97 |
| Heavy duty camera-mode switching | Switch from image shooting to video recording | 1198.44 | 1155.46 |
| | Switch from image shooting to a portrait mode | 1096.34 | 837.71 |
| Heavy duty camera-switch between front and rear cameras | Switch from a rear camera to a front camera | 953.7 | 1007.51 |
| | Switch from the front camera to the rear camera | 1247.21 | 1268.95 |

It should be noted that only several examples of the running status of the application are provided above. In some other embodiments, the running status the application or a phase of a life cycle may alternatively be classified in another manner. In addition, the foregoing technical solution may be used, to process a partial memory of the application (a memory of a non-critical service in a corresponding running status) based on the running status of the application (or a phase of the life cycle of the application).

In some solutions, a plurality of embodiments of this application may be combined, and a combined solution is implemented. Optionally, some operations in procedures of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution order is the only order in which these operations can be performed. A person of ordinary skill in the art may learn various manners of permutating the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, an electronic device in embodiments of this application includes corresponding hardware structures and/or software modules for performing the functions. With reference to the units and algorithm steps of examples described in embodiments disclosed in this application, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the electronic device may be divided into functional units based on the foregoing method examples. For example, each function unit may be obtained through division based on each corresponding function, or two or more functions may be integrated into one processing unit. The integrated unit may be implemented in a form of hardware, or may be implemented in a form of a software function unit. It should be noted that, in this embodiment of this application, division into the units is an example, and is merely a logical function division. In actual implementation, another division manner may be used.

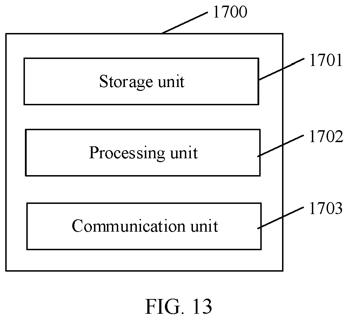

FIG. 13 is a block diagram of a memory management apparatus according to an embodiment of this application. The apparatus may be the foregoing first electronic device or a component having a corresponding function. An apparatus 1700 may exist in a form of software, or may be a chip that can be used in a device. The apparatus 1700 includes a processing unit 1702. The processing unit 1702 may be configured to support S101, S104, and the like shown in FIG. 8, and/or configured to perform another process of the solution described in this specification.

Optionally, the apparatus 1700 may further include a communication unit 1703. Optionally, the communication unit 1703 may be further divided into a sending unit (not shown in FIG. 13) and a receiving unit (not shown in FIG. 13). The sending unit is configured to support the apparatus 1700 in sending information to another electronic device. The receiving unit is configured to support the apparatus 1700 in receiving information from the another electronic device.

Optionally, the apparatus 1700 may further include a storage unit 1701, configured to store program code and data of the apparatus 1700. The data may include but is not limited to original data, intermediate data, or the like.

In a possible manner, the processing unit 1702 may be a controller or the processor 401 and/or 408 shown in FIG. 5, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a transistor logic device, a hardware component, or any combination thereof. The processing unit 1702 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

In a possible manner, the communication unit 1703 may include the transceiver 404 shown in FIG. 5, and may further include a transceiver circuit, a radio frequency component, and the like.

In a possible manner, the storage unit 1701 may be a memory 403 shown in FIG. 5.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the method in the foregoing embodiment.

An embodiment of this application further provides a chip system. The chip system includes a processor, the processor is coupled to a memory, and the memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

Embodiments of this application further provide a computer-readable storage medium. The computer-readable storage medium stores computer instructions. When the computer instructions are run on an electronic device, the electronic device is enabled to perform the related method steps, to implement the method in the foregoing embodiment.

An embodiment of this application further provides a computer program product. When the computer program product runs on a computer, the computer is enabled to perform the foregoing related steps, to implement the method in the foregoing embodiment.

In addition, an embodiment of this application further provides an apparatus. The apparatus may be specifically a component or a module. The apparatus may include a processor and a memory that are connected. The memory is configured to store computer-executable instructions. When the apparatus runs, the processor may execute the computer-executable instructions stored in the memory, to enable the apparatus to perform the methods in the foregoing method embodiments.

The electronic device, the computer-readable storage medium, the computer program product, or the chip provided in embodiments of this application is configured to perform the corresponding method provided above. Therefore, for beneficial effects that can be achieved, refer to the beneficial effects of the corresponding method provided above. Details are not described herein again.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation falls beyond the scope of this application.

In this embodiment, the electronic device may be divided into functional modules based on the foregoing method examples. For example, each functional module may be obtained through division based on each function, or two or more functions may be integrated into one processing module. The integrated module may be implemented in a form of hardware. It should be noted that, in this embodiment, division into the modules is an example and is merely logical function division. In actual implementation, another division manner may be used.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed apparatuses and methods may be implemented in other manners. For example, the described terminal device embodiment is merely an example. For example, division into the modules and the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A memory management method, wherein the method is applied to an electronic device, and the method comprises:
detecting a running status of a first application; and
processing, when detecting that the running status of the first application is switched from a first running status to a second running status, a partial memory referenced by the first application, wherein the partial memory is a memory associated with a target service of the first application, and the target service is a non-critical service of the first application in the second running status.

2. The method according to claim 1, wherein the processing, when detecting that the running status of the first application is switched from a first running status to a second running status, a partial memory referenced by the first application comprises: when detecting that the running status of the first application is switched from the first running status to the second running status, and duration in which the first application is in the second running status reaches a first threshold, processing the partial memory referenced by the first application.

3. The method according to claim 1 or 2, wherein the target service comprises a first service and/or a second service, a memory associated with the first service comprises a first partial memory, and a memory associated with the second service comprises a second partial memory;
the first partial memory is a page that is not referenced by the first application in a first time period; and
the second partial memory is a compressed page that is not referenced by the first application in a second time period.

4. The method according to claim 3, wherein duration of the second time period is greater than duration of the first time period.

5. The method according to any one of claims 1 to 4, wherein the second running status comprises a first background running status; and
the processing, when detecting that the running status of the first application is switched from a first running status to a second running status, a partial memory referenced by the first application comprises:
when detecting that the running status of the first application is switched from the first running status to the first background running status, compressing the first partial memory associated with the first service.

6. The method according to claim 3 or 4, wherein the second running status comprises a first background running status; and
the processing, when detecting that the running status of the first application is switched from a first running status to a second running status, a partial memory referenced by the first application comprises:
when detecting that the running status of the first application is switched from the first running status to the first background running status, swapping the second partial memory associated with the second service to disk space.

7. The method according to any one of claims 1 to 6, wherein the first running status is a foreground running status.

8. The method according to any one of claims 1 to 6, wherein the first running status is a second background running status.

9. The method according to claim 3 or 4, wherein the method further comprises:
detecting that the running status of the first application is switched from the first background running status to a third background running status; and
compressing a third partial memory of the first application, wherein the third partial memory is a memory that is not referenced by the first application in the first time period; and/or
swapping a fourth partial memory of the first application to disk space, wherein the fourth partial memory is a memory that is not referenced by the first application in the second time period, and duration of a fourth time period is greater than duration of a third time period.

10. The method according to any one of claims 1 to 9, wherein the processing a partial memory referenced by the first application comprises:
obtaining a virtual memory area VMA corresponding to the partial memory and a linked list corresponding to the VMA, wherein the linked list comprises the partial memory; and
processing the partial memory in the linked list.

11. The method according to claim 5 or 6, wherein the method further comprises:
displaying a first interface; and
receiving an operation input by a user on the first interface, wherein the operation is used to enable a memory management function.

12. The method according to claim 5 or 6, wherein the first background running status comprises the following statuses: a background playing status, a background service status, a background cache status, a shallow frozen status, and a deep frozen status, wherein
in the background playing status, the first application executes a first task in a background;
in the background service status, the first application provides a background service in the background, and does not execute the first task in the background;
in the background cache status, the first application does not execute the first task in the background and does not provide the background service, and duration in which the first application is in the background running status reaches first duration;
in the shallow frozen status, the first application does not execute the first task in the background and does not provide the background service, and the duration in which the first application is in the background running status reaches second duration, wherein the second duration is greater than the first duration; and
in the deep frozen status, the first application does not execute the first task in the background and does not provide the background service, and the duration in which the first application is in the background running status reaches third duration, wherein the third duration is greater than the second duration.

13. The method according to claim 12, wherein
in the background playing status, the first service comprises a service related to interface display;
in the background service status, the first service comprises a service corresponding to the first task;
in the background cache status, the first service comprises the background service, and the second service comprises the service related to interface display;
in the shallow frozen status, the second service comprises the service corresponding to the first task and the background service; and
in the deep frozen status, the first service comprises a service corresponding to an object, a class, or a method.

14. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 13.

15. A computer-readable storage medium, comprising computer instructions, wherein when the computer instructions are run on an electronic device, the electronic device is enabled to perform the method according to any one of claims 1 to 13.

16. A computer program product, wherein when the computer program product runs on an electronic device, the electronic device is enabled to perform the method according to any one of claims 1 to 13.
